# EUROPEAN PATENT APPLICATION

(11) **EP 4 757 324 A1**
(43) Date of publication of application: **10.06.2026**
(21) Application number: 24909761.9
(22) Date of filing: 02.08.2024
(51) Int. Cl.: H04N 21/431

(54) **DISPLAY METHOD AND ELECTRONIC DEVICE**

(30) Priority: 28.12.2023 CN 202311844689
(71) Applicant: Honor Device Co., Ltd., Shenzhen, Guangdong 518040 (CN)
(72) Inventor: WANG, Di, Shenzhen, Guangdong 518040 (CN); YI, Jie, Shenzhen, Guangdong 518040 (CN); LUO, Lan, Shenzhen, Guangdong 518040 (CN)
(74) Representative: Goddar, Heinz J.
(86) International application number: PCT/CN2024/109560
(87) International publication number: WO 2025/138807

(57) **Abstract**

Embodiments of this application provide a display method and an electronic device, and relate to the technical field of electronic devices. The method can improve the efficiency of a user generating a video with an image by using a corresponding function. The method may include: receiving a first operation, where the first operation is used to indicate an electronic device to display an interface of a first function, and the first function corresponds to a video file that is generated based on an image; and displaying a first interface, where the first interface corresponds to the first function, and the first interface includes at least two scene cards. A first scene card is displayed before a second scene card. A quantity of available display columns of the first scene card is greater than a quantity of available display columns of the second scene card. Each available display column corresponds to one video file capable of being generated.

## Description

This application claims priority to Chinese Patent Application No. 202311844689.1, filed with the China National Intellectual Property Administration on December 28, 2023 and entitled "DISPLAY METHOD AND ELECTRONIC DEVICE", which is incorporated herein by reference in its entirety.

### TECHNICAL FIELD

Embodiments of this application relate to the technical field of electronic devices, and in particular, to a display method and an electronic device.

### BACKGROUND

Currently, an electronic device can automatically generate a video file based on an existing image under an indication of a user.

Generally, when the electronic device has stored images, the user needs to spend a lot of effort to obtain a desired image through filtering because the images are scattered in a gallery. Thereafter, a process of indicating the electronic device to generate a video based on the image obtained through filtering is relatively complicated.

### SUMMARY

This application provides a display method and an electronic device, to improve efficiency of generating a video with an image by using a corresponding function by a user.

To achieve the foregoing technical objective, this application uses the following technical solutions:
According to a first aspect, a display method is provided and applied to an electronic device. The electronic device is configured with a display. The method includes: receiving a first operation, where the first operation is used to indicate the electronic device to display an interface of a first function, and the first function corresponds to a video file that is generated based on an image; and displaying a first interface, where the first interface corresponds to the first function, the first interface includes at least two scene cards, and each scene card correspondingly displays a background image, a card theme, and a prompt statement; in the first interface, a first scene card is displayed before a second scene card; the first scene card and the second scene card are included in the at least two scene cards; a quantity of available display columns of the first scene card is greater than a quantity of available display columns of the second scene card; each available display column corresponds to one video file capable of being generated; or a display priority of the first scene card pre-configured by the electronic device is higher than a display priority of the second scene card.

In this way, the electronic devices can display scene cards in sequence based on a quantity of videos that can be generated. Therefore, scene cards that can generate more videos can be displayed on positions closer to the front, to help the user to use an image-to-video conversion function. Correspondingly, when information about the quantity of videos that can be generated in each scene card cannot be obtained, the scene cards can be displayed based on default priorities.

Optionally, the quantity of available display columns of the first scene card is greater than the quantity of available display columns of the second scene card; and before the displaying a first interface, the method further includes: determining a first quantity of available display columns of the first scene card and a second quantity of available display columns of the second scene card.

Optionally, the electronic device stores at least one image; and before the determining a first quantity and a second quantity, the method further includes: determining attribute information of each image, where the attribute information includes at least one dimension of information: a person attribute, a place attribute, a time attribute, and an event attribute; annotating the image with at least one label based on the attribute information of the image, where the label of the image corresponds to the attribute information of the image; and determining, for each rule in each scene card, an available image set matching the rule, where each scene is configured with at least one rule, and each rule is configured with the at least one label. In this application, this processing may also be referred to as CV analysis. Based on this, the electronic device can determine the quantity of videos that can be generated for each scene card.

Optionally, the determining a first quantity includes: determining that a quantity of available rules included in the first scene card is the first quantity, where the available rule included in the first scene card is a rule, in all rules correspondingly configured for the first scene card, for which the available image set is non-empty.

Optionally, the determining a second quantity includes: determining that a quantity of available rules included in the second scene card is the second quantity, where the available rule included in the second scene card is a rule, in all rules correspondingly configured for the second scene card, for which the available image set is non-empty.

Optionally, the first quantity is not 0; a prompt statement in the first scene card is the same as a name of a first display column; and the first display column corresponds to a first rule, and the first rule is a rule, in all available rules in the first scene card, that corresponds to a maximum quantity of available images.

Optionally, a background image in the first scene card is a preset image. For example, a background image displayed in the scene card may be a preset image.

Optionally, the first interface further includes a third scene card; and the method further includes: receiving a second operation, where the second operation is an operation performed on the third scene card, and the second operation is used to indicate the electronic device to display details of the third scene card; and displaying a second interface, where the second interface includes at least one display column, and each display column corresponds to one rule configured for the third scene card.

Therefore, in combination with a related interaction example of the third scene card, related displaying and interaction implementations of each display column in the scene card are further provided.

Optionally, the at least one display column included in the second interface includes a second display column and a third display column; the second display column is displayed before the third display column; and a quantity of available images corresponding to a rule for the second display column is larger than a quantity of available images corresponding to a rule for the third display column. In this way, the electronic device can display the display columns in sequence based on the quantity of available images corresponding to the display columns.

Optionally, before the displaying a second interface, the method further includes: determining a name of the second display column based on a label of an available image of the second display column. In this example, the electronic device may further generate a name of the display column based on at least one label of the available image corresponding to each display column and a pre-configured statement style. The name of the display column may be further used to replace a prompt statement displayed in the scene card.

Optionally, the second interface includes a fourth display column; and the fourth display column is a pre-configured display column of the third scene card. In this way, when the available image corresponding to each rule may not be obtained, or when the available image corresponding to each rule is empty, the electronic device can display the display column based on a preset display mechanism.

Optionally, before the displaying a second interface, the method further includes: determining that an available set image of each rule in the third scene card is empty.

Optionally, an image displayed in the fourth display column is the same as a background image displayed in the third scene card.

Optionally, the method further includes: receiving a third operation, where the third operation is an operation performed on the fourth display column; and displaying a third interface in response to the third operation, where the third interface includes a fifth display column; and an available image set corresponding to a rule for the fifth prompt column is non-empty. Therefore, when the display column tapped by the user cannot generate a video, the electronic device can display, to the user in a manner of displaying the fifth display column, another display column that can generate the video for selection.

Optionally, the method further includes: receiving a third operation, where the third operation is an operation performed on the fourth display column; and displaying a fourth interface in response to the third operation, where the fourth interface includes first prompt information, and the first prompt information is used to prompt a user to shoot an image; and before the receiving a third operation, determining that an available image set corresponding to a rule for the scene is empty. Therefore, the electronic device can prompt, based on the first prompt information, the user to obtain more images by shooting, to implement sorting and displaying of the scenes and the display columns according to the above solution.

Optionally, the display priority of the first scene card pre-configured by the electronic device is higher than the display priority of the second scene card; and after the displaying a first interface, the method further includes: receiving a fourth operation, where the third operation is an operation performed on a fourth scene card, the fourth operation is used to indicate the electronic device to display details of the fourth scene card, and the fourth scene card is displayed in the first interface; and displaying a fifth interface in response to the fourth operation, where the fifth interface includes a sixth display column, and the sixth display column is a pre-configured display column of the fourth scene card. The solution provides display logic for which the CV analysis is not performed. For example, the scene images may be displayed in a preset sequence. For another example, after the user taps one scene image, the electronic device may display a preset display column in the interface.

Optionally, the method further includes: receiving a fifth operation, where the fifth operation is an operation performed on the sixth display column; and displaying second prompt information in response to the fifth operation, where the second prompt information is used to prompt a user to trigger smart image recognition processing. The smart image recognition processing includes: determining attribute information of each image, where the attribute information includes at least one dimension of information: a person attribute, a place attribute, a time attribute, and an event attribute; annotating the image with at least one label based on the attribute information of the image, where the label of the image corresponds to the attribute information of the image; and determining, for each rule in each scene card, an available image set matching the rule, where each scene is configured with at least one rule, and each rule is configured with the at least one label. Therefore, an entry for triggering the CV analysis is provided, for example, the second prompt information. In some other implementations, the second prompt information may further include components such as a function button.

Optionally, the first interface further includes a fifth scene card; the fifth display card is displayed before the first scene card; and before the displaying a first interface, the method further includes: receiving first push information, where the first push information includes a background image, a card theme, and a prompt statement in the fifth scene card. This example provides a display logic for receiving a scene card pushed from a cloud server before displaying the scene image on the electronic device. For example, the scene card pushed by the cloud server may be displayed at the top.

Optionally, after the displaying a first interface, the method further includes: receiving a sixth operation, where the sixth operation is used to indicate the electronic device to display details of the fifth scene card; displaying a sixth interface in response to the sixth operation, where the sixth interface includes a pre-configured seventh display column of the fifth scene card; receiving a seventh operation, where the seventh operation is an operation performed on the seventh display column; obtaining, in response to the seventh operation, at least one image corresponding to the seventh display column; and displaying a seventh interface, where the seventh interface includes an image corresponding to the seventh display column. When the user taps the scene card pushed by the cloud server, the electronic device may obtain, from the cloud server, the display column corresponding to the card and image information corresponding to the display column. Therefore, the user can quickly obtain popular scene cards and images on the Internet.

According to a second aspect, this application further provides an electronic device. The electronic device includes a display, a memory, and one or more processors. The display and the memory are coupled to the processor. The memory is configured to store computer program code, and the computer program code includes computer instructions; and when the processor executes the computer instructions, the electronic device is enabled to execute the technical solutions provided in any one of the first aspect and the possible implementations of the first aspect. For example, the electronic device controls the display to display based on the interface provided in designs according to any one of the first aspect and any possible design manner of the first aspect.

According to a third aspect, this application further provides a chip system. The chip system is applied to an electronic device. The chip system may include one or more interface circuits and one or more processors. The interface circuits and the processors are interconnected by using lines. The interface circuit is configured to receive a signal from a memory of the electronic device, and send the signal to the processor. The signal includes computer instructions stored in the memory. When the process executes the computer instructions, the electronic device executes the technical solutions provided in any one of the first aspect and the possible implementations of the first aspect.

According to a fourth aspect, this application further provides a computer-readable storage medium. The computer-readable storage medium includes computer instructions. When the computer instructions are run on an electronic device, the electronic device is enabled to perform the technical solution according to any one of the first aspect and the possible implementations of the first aspect.

According to a fifth aspect, this application further provides a computer program product. When the computer program product is run on a computer, the computer is enabled to perform the technical solution according to any one of the first aspect and the possible implementations of the first aspect.

It may be understood that the solutions provided in the second aspect to the fifth aspect provided in this application may separately correspond to any one of the first aspect and the possible designs of the first aspect. Therefore, the beneficial effect that can be achieved are similar, and details are not described herein again.

### BRIEF DESCRIPTION OF THE DRAWING

FIG. 1 is a schematic diagram of displaying of interfaces according to an embodiment of this application;
FIG. 2 is a schematic diagram of composition of an electronic device according to an embodiment of this application;
FIG. 3 is a schematic diagram of composition of an electronic device according to an embodiment of this application;
FIG. 4 is a schematic diagram of composition of a scene card according to an embodiment of this application;
FIG. 5 is a schematic diagram of a scene card according to an embodiment of this application;
FIG. 6A to FIG. 6D are a schematic diagram of a logic for an interface interaction according to an embodiment of this application;
FIG. 7A to FIG. 7F are a schematic diagram of a logic for an interface interaction according to an embodiment of this application;
FIG. 8A to FIG. 8E are a schematic diagram of a logic for an interface interaction according to an embodiment of this application;
FIG. 9A and FIG. 9B are a schematic diagram of a logic of an interface according to an embodiment of this application;
FIG. 10A and FIG. 10B are a schematic diagram of a logic for an interface interaction according to an embodiment of this application;
FIG. 11A to FIG. 11F are a schematic diagram of a logic for an interface interaction according to an embodiment of this application;
FIG. 12 is a schematic diagram of a logic for an interaction between an electronic device and a cloud according to an embodiment of this application;
FIG. 13A to FIG. 13C are a schematic diagram of a logic for an interface interaction according to an embodiment of this application;
FIG. 14 is a schematic diagram of composition of an electronic device according to an embodiment of this application; and
FIG. 15 is a schematic diagram of composition of a chip system according to an embodiment of this application.

### DESCRIPTION OF EMBODIMENTS

Hereinafter, the terms "first" and "second" are for descriptive purposes only and are not to be construed as indicating or implying their relative importance or implicitly specifying the number of indicated technical features. Therefore, a feature defined with "first" or "second" may explicitly or implicitly include one or more such features. In descriptions of embodiments of this embodiment, unless otherwise stated, "a plurality of" means two or more.

Currently, a shooting function has become one of the most frequently used functions on an electronic device.

A user may shoot images by using the electronic device. Correspondingly, the electronic device may store a shot image in a memory.

In this application, the electronic device may further perform, based on the stored image, processing to provide richer and smarter experience for the user. The stored image may include a photo shot by the electronic device and/or an image obtained in other manners. For example, the image obtained in other manners may include an image obtained from a network, another electronic device, or another application.

In the following example, an example in which the image stored in the electronic device includes a shot photo is used.

For example, in some embodiments of this application, processing performed on the stored image may be implemented based on a CV processing capability configured in the electronic device. The CV processing may also be referred to as CV analysis.

In this example, the electronic device may perform, using the CV processing capability, CV processing such as recognition, classification, and learning on a shot and stored image. The CV processing capability may also be referred to as a smart image recognition capability.

In some other embodiments, the electronic device may further perform CV processing, to generate a corresponding video file based on the shot and stored image.

In some other embodiments, the electronic device may be further configured with an application or a software module capable of invoking the CV processing capability. For example, in some implementations, the electronic device may invoke the CV processing capability via a gallery application configured therein, to implement an operation related to the CV processing. In some other implementations, the electronic device may invoke the CV processing capability via the software module (for example, a middle platform module) configured therein. The middle platform module may be configured in the electronic device in a form of a system application or in a form of a software module configured in a framework layer.

In addition, the electronic device may be further configured with other applications (such as a smart assistant application), and display different interfaces to the user on a display of the electronic device based on a CV processing result, a pre-configured interaction logic, the CV processing result, and an operation performed by the user.

The user indicating the electronic device to generate a video file based on an existing image is used as an example.

The electronic device determines, based on the CV processing result, specific video files that can be currently generated based on the existing image. The electronic device may further configure a corresponding display priority for each video file based on a pre-configured rule file. Therefore, when the display priority is higher, a corresponding position of a display column of the video file on the display is closer to the front.

In addition, the electronic device may further map different video files to scene cards. Each scene card may correspond to one or more video files that may be generated. In this way, the electronic device may further display, to the user, a plurality of scene cards on the display based on the CV processing result. Therefore, the user may quickly browse and recognize, via the scene card, a type of a video that needs to be generated. In some implementations, the electronic device may further configure a corresponding display priority for each scene card based on the pre-configured rule. Therefore, when the display priority is higher, a position of the card in the interface is closer to the front.

In addition, in this application, the electronic device may be further configured with a display logic used when no video file may be generated.

It should be noted that in this embodiment of this application, a scene card or a thumbnail in each interface may correspondingly display a corresponding image. In the following description, the image being replaced with a text is used as an example. For example, an image preset in the electronic device or an image obtained from a cloud may be replaced and represented in a form of "image" + "number", for example, "image 1". For another example, an image in the gallery application of the electronic device may be replaced and represented in a form of "image" + "letter", for example, "image a".

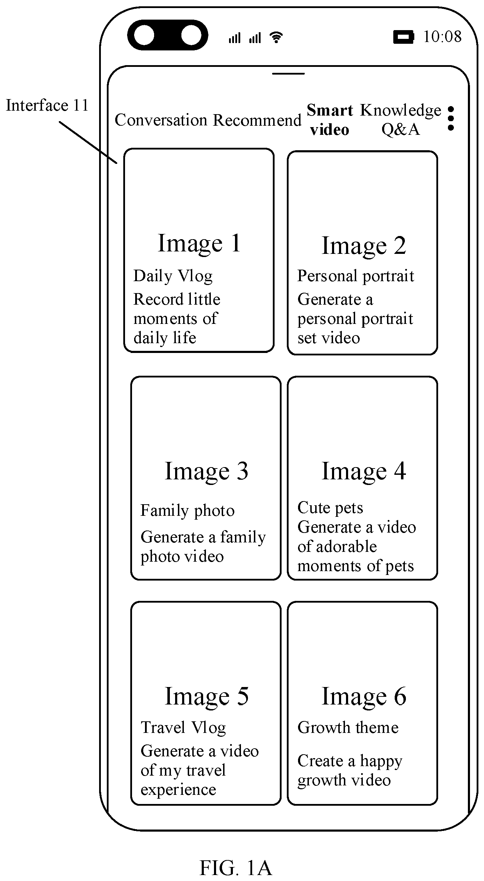

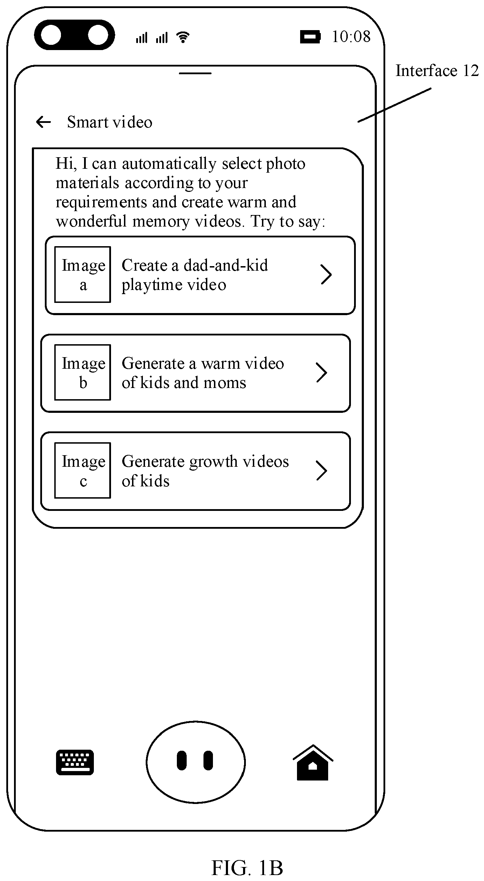

In an example, FIG. 1 shows an example of two interfaces according to an embodiment of this application.

As shown in FIG. 1, an interface 11 may display a plurality of scene cards to the user. For example, the plurality of scene cards may include cards corresponding to different scenes such as "Daily Vlog", "Personal portrait", "Family photo", "Cute pets", "Travel Vlog", and "Growth theme". Before displaying the scene cards, the electronic device may configure corresponding display priorities for different scene cards according to the solution provided in this embodiment of this application. It may be understood that the determining of the display priority is related to an image that may be used to currently generate a video file. Therefore, the display priority may well match a current usage habit of the user. Therefore, the user may more easily find, in the interface 11 displayed based on the display priority, a scene in which a video needs to be generated.

As shown in an interface 12 in FIG. 1, in this application, the electronic device may further display, to the user, a display column that may generate a video file in any scene. In an example of FIG. 1, an example in which a maximum quantity of display columns that may generate a video file and that are displayed on the display is 3 is used. The displaying of the display column may be further implemented after the electronic device performs CV processing, and sorts video files based on the CV processing result. In this way, the user can more conveniently determine, in the interface 12, a video file that may be currently generated. However, because a display sequence of display columns may correspond to current existing images, a display column displayed at a position closer to the front can better match user habits. This further enhances the convenience of use in a scene in which a video is generated based on the image.

The following describes in detail an obtaining mechanism and a display mechanism of the interfaces (such as the interface 11 and the interface 12 shown in FIG. 1) and an interaction logic between the interfaces in the solution provided in this embodiment of this application with reference to the accompanying drawings.

It should be noted that in this embodiment of this application, the electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, or a smart city device.

A specific type of the electronic device is not specifically limited in this embodiment of this application.

In some embodiments, the electronic device may include a processor, an external memory interface, an internal memory, a universal serial bus (universal serial bus, USB) interface, a charging management module, a power supply management module, a battery, an antenna 1, an antenna 2, a mobile communication module, a wireless communication module, an audio module, a speaker, a receiver, a microphone, a headset jack, a sensor module, a button, a motor, an indicator, a camera module, a display, and a subscriber identification module (subscriber identification module, SIM) card interface. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

In this example, the processor may include one or more processing units. For example, the processor may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor (baseband processor, BP or BBP), and/or a neural-network processing unit (neural-network processing unit, NPU). Different processing units may be separate devices, or may be integrated into one or more processors.

The processor may generate an operating control signal according to an instruction operation code and a sequence signal, to complete control of fetching and executing an instruction.

The processor may be further provided with a memory for storing instructions and data. In some embodiments, the memory in the processor may be a cache memory. The memory may store instructions or data that has been used by the processor or used at a high frequency. If the processor needs to use the instructions or data, the processor may directly invoke the instructions or data from the memory. This avoids repeated access, shortens waiting duration of the processor, and improves system efficiency.

It should be noted that the structure shown in this embodiment does not constitute a specific limitation on the electronic device. In some other embodiments of this application, the electronic device may include more or fewer components than those shown in the figure, or some components are combined, or some components are split, or the components are differently arranged. The any components in this embodiment may be implemented by using hardware, software, or a combination of software and hardware.

For example, the electronic device may be further configured with a touch panel (Touch Panel, TP). The touch panel may be used to receive a touch operation performed by the user. For example, the touch operation may include operations such as a sliding operation, a tap operation, and the like. In some implementations, the touch panel may be coupled to the display. Therefore, the user may perform the touch operation based on an interface image displayed on the display. Correspondingly, the touch panel may generate corresponding operation information based on the touch operation. The operation information may include location information and type information for receiving the touch operation. Therefore, the electronic device may respond correspondingly based on the currently displayed image and the operation information.

It should be noted that the foregoing example provides an example of hardware component of the electronic device. An embodiment of this application further provides software composition of the electronic device.

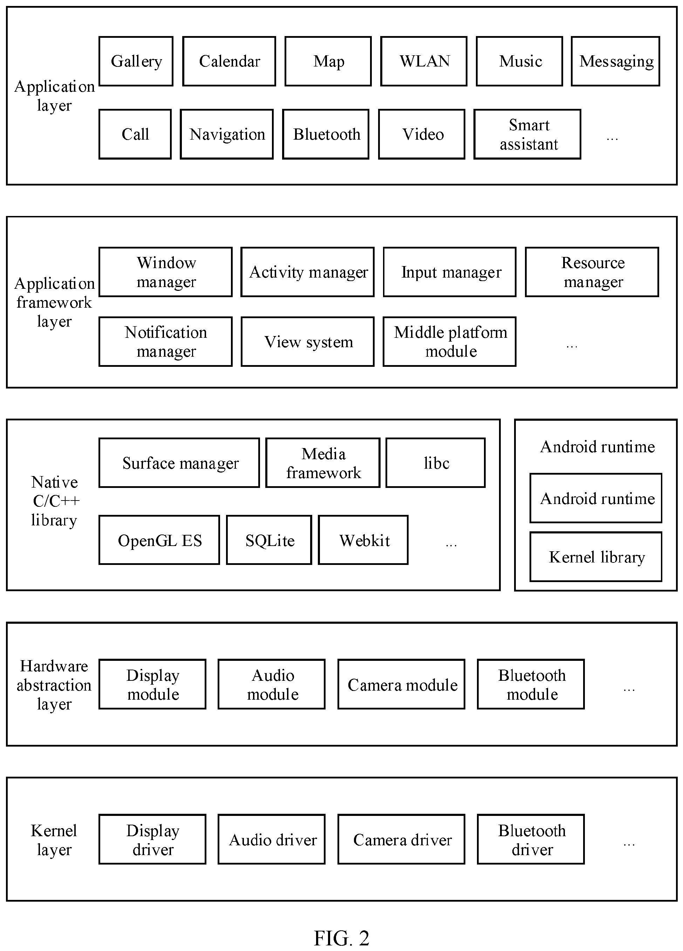

For example, FIG. 2 is a schematic diagram of software composition of an electronic device according to an embodiment of this application.

In this application, the electronic device may have a layered architecture. In the layered architecture, software is divided into several layers, and each layer has a clear role and task. The layers communicate with each other by using a software interface. In some embodiments, the Android^{®} system is divided into five layers: an application program layer, an application program framework layer, Android runtime (Android runtime, ART), a native C/C++ library, a hardware abstract layer (Hardware Abstract Layer, HAL), and a kernel layer from top to bottom.

The application layer may also be referred to as an application layer and an APP layer. The application layer may include a series of application program packages.

As shown in FIG. 2, the application program packages may include application programs such as Gallery, Calendar, Map, WLAN, Music, SMS message, Call, Navigation, Bluetooth, and Video. As shown in FIG. 2, in this application, the application program package in the electronic device may further include a smart assistant application.

In this application, the electronic device may implement the interaction logic and the display logic between the interfaces by running the smart assistant application. Details are described in detail in the following description.

The application framework layer is also referred to as a framework layer and a framework layer. The framework layer may provide an application programming interface (application programming interface, API) and a programming framework for an application at the application layer. The framework layer includes predefined functions.

As shown in FIG. 2, the framework layer may include a window manager, a content provider, a view system, a resource manager, a notification manager, an activity manager, an input manager, a middle platform module, and the like.

The window manager provides a window manager service (Window Manager Service, WMS), and the WMS may be used for window management, window animation management, and surface management, and may be used as a transfer station of an input system.

The content provider is configured to store and obtain data and make the data accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying a picture.

The resource manager provides various resources for an application, such as a localized character string, an icon, an image, a layout file, and a video file.

The notification manager enables an application to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

The activity manager may provide an activity manager service (Activity Manager Service, AMS), and the AMS may be used to start, switch, and schedule a system component (for example, an activity, a service, a content provider, and a broadcast receiver), and manage and schedule work of an application process.

The input manager may provide an input management service (Input Manager Service, IMS), and the IMS may be used to manage a system input, for example, touchscreen input, key input, and sensor input. The IMS obtains an event from an input device node, and allocates the event to an appropriate window through interaction with the WMS.

The middle platform module configured in the framework layer may support the CV processing capability involved in the foregoing embodiments.

The Android runtime includes a core library and the Android runtime. The Android runtime is responsible for converting source code into machine code. The Android runtime mainly includes using an ahead of time (ahead or time, AOT) compilation technology and a just in time (just in time, JIT) compilation technology.

The core library is mainly used to provide functions of a basic Java class library, for example, a library such as a basic data structure, mathematics, an IO, a tool, a database, or a network. The core library provides an API for a user to develop an Android application.

The native C/C++ library may include a plurality of functional modules, for example, a surface manager (surface manager), a media framework (Media Framework), a libc, OpenGL ES, SQLite, and Webkit.

The surface manager is configured to manage a display subsystem, and provide fusion of 2D and 3D layers for a plurality of application programs. The media framework supports playback and recording in a plurality of commonly used audio and video formats, and static image files. The media library may support a plurality of audio and video encoding formats, such as MPEG4, H.264, MP3, AAC, AMR, JPG, PNG, and the like. The OpenGL ES provides drawing and operation of a 2D graphic and a 3D graphic in an application program. The SQLite provides a lightweight relational database for an application program of the electronic device.

The hardware abstraction layer runs in user space (user space), encapsulates a kernel layer drive, and provides a call interface to an upper layer. For example, the hardware abstract layer may include a display module, an audio module block, a camera module, and a Bluetooth module.

The kernel layer is a layer between hardware and software. The kernel layer includes at least a display driver, a camera driver, an audio driver, and a Bluetooth driver.

It should be noted that the software composition shown in FIG. 2 is merely an example, and does not constitute limitation on the electronic device in this embodiment of this application.

In some other embodiments, the electronic device may also include other components.

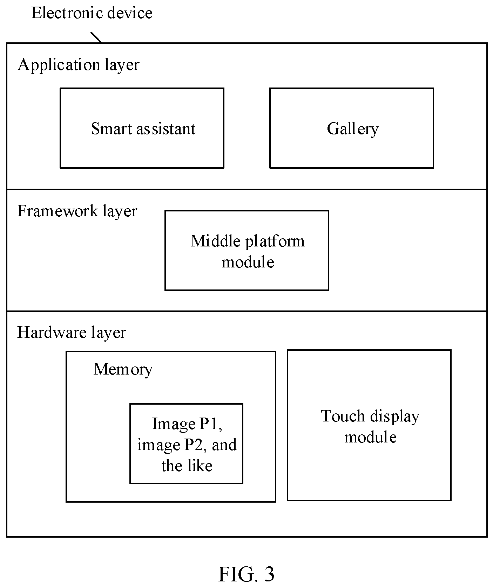

For example, FIG. 3 is a schematic diagram of another composition of an electronic device according to an embodiment of this application.

An example shown in FIG. 3 shows a software layer (for example, an application layer and a framework layer) in the electronic device, and further shows a hardware configuration (for example, a hardware layer) in the electronic device. Therefore, the solution provided in this embodiment of this application is implemented through the cooperation of the software layer and the hardware layer shown in FIG. 3.

As shown in FIG. 3, the application layer may include a smart assistant application, a gallery application, and the like.

The framework layer may be configured with a middle platform module.

The hardware layer may include a memory and a touch display module. The memory may be used to provide a storage capability. In this application, when a user performs shooting via the electronic device, the memory may store images such as an image P1, an image P2, and the like that are maintained by the gallery application. The display touch module may include a display, a touch panel, a drive module corresponding to the display, and a drive module corresponding to the touch panel. In this way, the display touch module may be used to receive a touch operation performed by the user. The drive module corresponding to the touch panel correspondingly transmits operation information upward to the application layer, and a corresponding application responds. When the application program instructs the electronic device to display the image, the display touch module may further display an image from an upper layer, for example, display the interface 11 or the interface 12 shown in FIG. 1.

In this embodiment of this application, an image maintained by the gallery application may also be referred to as an image in the gallery application, or an image in a gallery, or an image stored in the gallery.

The solution provided in this embodiment of this application may be applied to the electronic device shown in FIG. 2 or FIG. 3.

The composition of the electronic device shown in FIG. 3 is used as an example to describe a process in which the electronic device performs CV analysis.

For example, in some embodiments, the CV analysis may be performed by the middle platform module in combination with the gallery application. In some other embodiments, the smart assistant may further participate in the triggering and/or performing process of the CV analysis.

This application describes in detail the triggering of the CV analysis during a subsequent interface interaction. A brief description is made to the performing process of the CV analysis here.

When the electronic device performs CV analysis, the middle platform module may obtain all current images from the gallery. Correspondingly, the gallery may send storage addresses of images such as the image P1 and the image P2 to the middle platform module. Therefore, the middle platform module may obtain the images from the storage addresses.

In this application, the CV analysis may include processes such as image analysis, a label configuration, generation of a name of a display column, determining of a display priority, and the like.

For example, the middle platform module may perform image analysis on each image in a plurality of images, to obtain attribute information of each image.

In this application, attribute information of an image may include at least one of the following four dimensions of information:
a person attribute, a place attribute, a time attribute, and an event attribute.

Corresponding to each piece of attribute information, the middle platform module may configure a corresponding label for the image. For example, the middle platform module may configure, by performing image analysis, a corresponding attribute label for the image when the image includes one or more specific attributes in the person attribute.

The person attribute is used as an example.

In some embodiments, the person attribute may include an individual person attribute, a collective person attribute, and a joint person attribute.

The individual person attribute may include: individual, oneself, lover, husband, wife, grandfather, grandmother, father, mother, and the like.

In this way, the middle platform module may configure, by performing image analysis, a corresponding person attribute for the image when the image includes any one or more individual person attributes. For example, if it is determined, by performing image analysis, that the image P1 includes the person attribute of "oneself", the middle platform module may configure a label of "oneself" for the image P1.

The collective person attribute may include: kid, son, daughter, family, close friend, and the like.

In this way, the middle platform module may configure, by performing image analysis, a corresponding person attribute for the image when the image includes any one or more collective person attributes. For example, if it is determined, by performing image analysis, that the image P2 includes the person attribute of "kid", the middle platform module may configure a label of "kid" for the image P1.

The joint person attribute may include: family group, three-member family, and the like.

In this way, the middle platform module may configure, by performing image analysis, a corresponding person attribute for the image when the image includes any one or more joint person attributes. For example, if it is determined, by performing image analysis, that the image P2 includes the person attribute of "family group", the middle platform module may configure a label of "family group" for the image P1.

It may be understood that one or more labels of the person attributes may be configured for a same image. For example, after the image P2 is analyzed, labels of "kid" and "family group" may be configured for the image P2. When the image does not include any person attribute, the middle platform module may not configure a person label for a current image.

The place attribute is used as an example.

In some embodiments, the place attribute may include a specific attribute, a collective attribute, and the like.

The specific attribute may include: hometown, locality, and the like.

In this way, the middle platform module may configure, by performing image analysis, a corresponding place attribute for the image when the image includes any one or more specific attributes. For example, if it is determined, by performing image analysis, that the image P1 includes the specific attribute of "hometown", the middle platform module may configure a label of "hometown" for the image P1.

The collective attribute may include: locality (locality), city, and the like.

The locality corresponds to a clustering result of a plurality of pre-configured localities. For example, the locality correspondingly includes: locality L1, locality L2, locality L3, and the like. The city corresponds to a clustering result of a plurality of pre-configured cities. For example, the locality correspondingly includes: city C1, city C2, and the like.

In this way, the middle platform module may configure, by performing image analysis, a corresponding place attribute for the image when the image includes any one or more collective attributes. For example, if it is determined, by performing image analysis, that the image P2 includes the place attribute of "city C1", the middle platform module may configure a label of "city C1" for the image P2.

Similar to the configuration of the person label, one or more place labels may be configured for a same image based on a specific image analysis result. Alternatively, if the current image does not correspond to any place attribute, the label of the place attribute is not configured for the image.

The time attribute is used as an example.

In some embodiments, the person attribute may include a relative time period, an important festival, a birthday/anniversary, and the like.

The attribute of the relative time period may include: today, yesterday, weekend, last week, this year, the past three years, spring, summer, autumn, winter, and the like.

In this way, the middle platform module may configure, by performing image analysis, a corresponding label of the time attribute for the image when a shooting time of the image corresponds to any one or more time attributes. For example, if it is determined, by performing image analysis, that the image P1 was shot yesterday afternoon, the middle platform module may configure the labels of "yesterday", "this year", and "the past three years" for the image P1.

The attribute of the important festival may include: time periods corresponding to festivals such as New Year's Day, New Year's Eve, and the Spring Festival. It may be understood that if the current locality of the user is different, the corresponding time period included in the attribute of the important festival may vary correspondingly.

In this way, the middle platform module may configure, by performing image analysis, a corresponding label of the time attribute for the image when the shooting time of the image corresponds to any one or more attributes of the important festival. For example, if it is determined, by performing image analysis, that the image P2 was shot during the Spring Festival, the middle platform module may configure a label of "the Spring Festival" for the image P1.

The attribute of the birthday/anniversary may correspond to a pre-configured specific date. The attribute of the birthday/anniversary may include an absolute time point with an expiration date, for example, a wedding anniversary, a graduation anniversary, a birthday, and the like.

In this way, the middle platform module may configure, by performing image analysis, a corresponding label of the time attribute for the image when the shooting time of the image corresponds to any one or more attributes of birthdays/anniversaries. For example, if it is determined, by performing image analysis, that the image P1 was shot on a graduation anniversary, the middle platform module may configure a label of "graduation anniversary" for the image P1.

In addition, the event attribute may be pre-configured in the electronic device, for example, events such as going on a trip, going to a park, or going to exercise. In this way, in an image analysis process, if the image includes an element (for example, a location of the park, park scenery, and the like, or the image includes a running posture, a swimming scene, and the like) corresponding to the event, a corresponding event label may be configured for the image.

In this way, the middle platform module may configure, by performing CV analysis on all existing images, a corresponding label for each image. The label may correspond to the attribute information of the image.

In this embodiment of this application, the middle platform module may further aggregate one or more images based on the configured label of the image and a pre-configured rule, to form an image set matching a current rule.

For example, each pre-configured rule may correspond to at least one label. Each rule corresponds to one scene in which a video may be generated.

A rule R1 corresponding to a label 1, a label 2, and a label 3 is used as an example. In this way, an image configured with the label 1, an image configured with the label 2, and an image configured with the label 3 may be aggregated into an image set 1. The image set 1 may correspond to the rule R1.

Therefore, the electronic device may generate, based on the image set 1, a video file in the video scene corresponding to the rule R1.

In a specific example, the video scene of the pre-configured rule may include: a kids' outing video, a weekend trip video, a family gathering video, a team building get-togethers video, a year-to-date landscape set, a landscape set of the city C1, and the like.

Therefore, the middle platform module may aggregate an image of which a person attribute includes "kid" and an image of which an event attribute includes "outing", to obtain an image set corresponding to a rule of "kids' outing video". Other similar cases are not described again.

In this way, the middle platform module may obtain, based on currently stored images, an image set corresponding to configured rules.

It may be understood that because the image set is obtained based on the label of each image and the matching of the rule, in some embodiments, quantities of corresponding images in the image set corresponding to different rules may be different. In some other embodiments, there may also be a case in which some or all rules do not have a matched image set.

In this application, after obtaining the image set corresponding to the rules, the middle platform module may further fill based on a pre-configured statement style in combination with the label of the image in the image set, to obtain a name of a display column that corresponds to the rule and that is displayed on the display.

For example, a rule for a kids' outing video scene is used as an example. A pre-configured statement style may be "generate" + person attribute + event attribute + "video". Therefore, the middle platform module may fill in the statement style based on the person attribute of "kid" and the event attribute of "outing" configured for all images in a current image set, to obtain a name of a display column of "Generate a kids' outing video".

Similarly, the middle platform module may generate a name of a corresponding column based on a rule for all current non-empty image sets (that is, including available images).

In addition, in this application, the middle platform module may be further configured with a display priority corresponding to each rule.

With reference to the description in FIG. 1, in some embodiments of this application, the display priority corresponding to each rule may be a display priority corresponding to each rule in a same scene card.

An example in which a rule configured in a scene card 1 includes a rule 1, a rule 2, a rule 3, a rule 4, a rule 5, a rule 6, and the like. Display priorities of the rule 1 to the rule 6 decline in sequence is used.

For the rule 1 to the rule 6, including a plurality of rules for the available images, N rules needing to be displayed at the top of an interface are determined based on the display priorities. For example, N may be configured as 3.

An example in which the rule 2, the rule 3, the rule 4, and the rule 5 include the available images while the rule 1 and the rule 6 do not include the available images is used.

In this way, when the user views details of the scene card 1 for the first time, the middle platform module may determine to display corresponding display columns in a sequence of the rule 2, the rule 3, and the rule 4. A display column of the rule 5 is not displayed herein.

In some embodiments, when the user views the details of the scene card 1 for the second time, because the rule 2 has been displayed at the top and display columns of other rules are still not displayed, the middle platform module may determine to display the corresponding display columns in a sequence of the rule 3, the rule 4, and the rule 5.

In some other cases, if the quantity of rules for the available images included in the scene card 1 is less than N, the middle platform module may display, based on the display priorities, all display columns of the rules including all available images in sequence when the details of the scene card 1 need to be displayed to the user.

By analogy, in another card scene, the middle platform module may further determine, via a similar mechanism, a sequence of the display columns when the user needs to view corresponding details.

It should be noted that in each card scene, explanations of the display sequence of the display columns corresponding to the rules are described by using an example in which each card scene includes at least one rule including the available image.

In some other cases, all rules in some scene cards do not include the available image. In this case, the display mechanism is described later.

Therefore, the middle platform module may determine, through the above implementations, the display mechanism for each display column in the interface when the user needs to view details of any scene card.

In some other embodiments of this application, the middle platform module may further determine the display sequence of each scene card in the interface 11 based on the above processing mechanism.

For example, the middle platform module may configure, as a scene card with a highest display priority, a scene card that is in all scene cards and has a maximum quantity of rules including the available images. Correspondingly, when the display priority is lower, the quantity of rules including the available images is smaller.

It may be understood that one rule including the available image may correspond to one video file that may be generated. In this way, when there are more rules including the available images, a quantity of video files that are generated in the scene card is larger.

Therefore, when the scene card capable of generating more video files is displayed at a position closer to the front, the user can more conveniently find, in the interface 11, a scene card capable of generating richer video files.

In the following description, the rule including the available image is referred to as an available rule. A display column corresponding to the available rule may be referred to as an available display column. In other words, for any available display column, the electronic device stores at least one image that matches a rule for the display column. Based on this, a video file corresponding to the display column may be generated.

In this way, based on the above functional description of the middle platform module, in this embodiment of this application, the middle platform module may collaborate with the gallery application to determine the display sequence of each scene card, the display sequence of each display column in each scene card, and the name of the display column.

In some embodiments of this application, each scene card may be pre-configured in the electronic device.

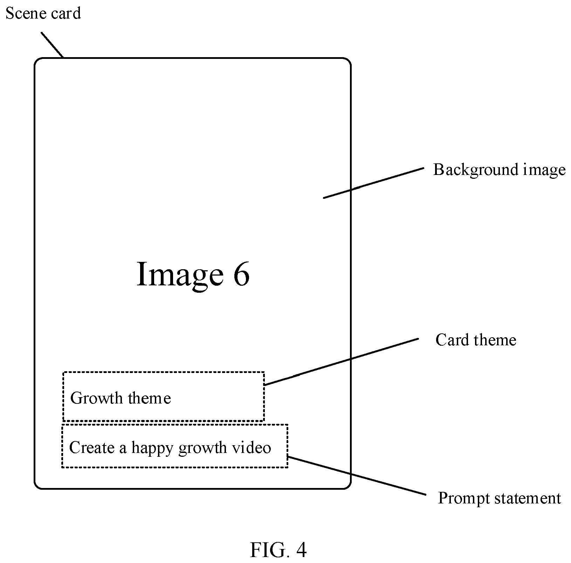

For example, FIG. 4 provides an example of a display element of the scene card in this embodiment of this application.

A scene card with a name of "growth theme" is used as an example. The display element of the scene card may include a background image, a card theme, and a prompt statement.

The background image (for example, an image 6) and the card theme (for example, the "growth theme") may be pre-configured in the electronic device. The background image and the card theme may be in a one-to-one correspondence. For different scene cards, displayed background cards and card themes may be different.

In this example, because of a feature that the background image and the card theme are pre-configured, when the images maintained by the gallery application are different (for example, on different electronic devices), the background image corresponding to a same card theme can remain consistent.

In an example shown in FIG. 4, the displaying of the prompt statement includes two cases:

If the scene card does not include the available display column, the prompt statement is displayed as a preset prompt statement corresponding to a current card theme.

If the scene card includes the available display column, the prompt statement is displayed as a name of the display column with the highest display priority (for example, a name of the rule with the highest display priority) in all display columns.

The scene card with the "growth theme" shown in FIG. 4 is used as an example.

If the scene card does not include the available display column, in the scene card with the growth theme in the interface 11, the prompt statement may be displayed as a pre-configured "Create a happy growth video".

If the scene card includes the available display column, for example, a name of the display column with the highest display priority is "Create a dad-and-kid playtime video", in the scene card with the growth theme in the interface 11, the prompt statement may be correspondingly adjusted and displayed as "Create a dad-and-kid playtime video".

A display mechanism for other scene cards in the interface 11 is similar.

In some embodiments of this application, the electronic device may be pre-configured with a plurality of scene cards.

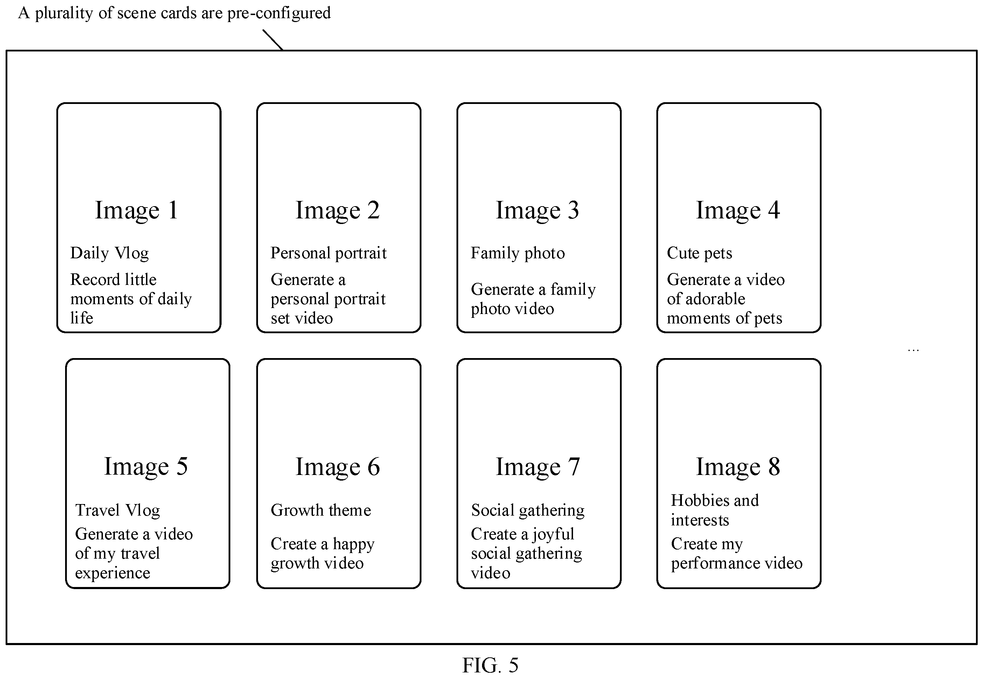

For example, FIG. 5 shows an example of some scene cards. In this example, the scene card may include:
a scene card of which a background image is an image 1, a card theme is "Daily Vlog", and a pre-configured prompt statement is "Record little moments of daily life";
a scene card of which a background image is an image 2, a card theme is "Personal portrait", and a pre-configured prompt statement is "Generate a personal portrait set video";
a scene card of which a background image is an image 3, a card theme is "Family photo", and a pre-configured prompt statement is "Generate a family photo video";
a scene card of which a background image is an image 4, a card theme is "Cute pets", and a pre-configured prompt statement is "Generate a video of adorable moments of pets";
a scene card of which a background image is an image 5, a card theme is "Travel Vlog", and a pre-configured prompt statement is "Generate a video of my travel experience";
a scene card of which a background image is an image 6, a card theme is "Growth theme", and a pre-configured prompt statement is "Create a happy growth video";
a scene card of which a background image is an image 7, a card theme is "Social gathering", and a pre-configured prompt statement is "Create a joyful social gathering video"; and
a scene card of which a background image is an image 8, a card theme is "Hobbies and interests ", and a pre-configured prompt statement is "Create my performance video".

In some implementations, the electronic device may be configured with 27 or more scene cards.

In this way, in combination with the description of the functions of the middle platform module, when performing CV analysis, the middle platform module may analyze an image set corresponding to each rule in each configured card theme. The middle platform module may further generate the name of the corresponding display column for the available rule. The middle platform module may further determine the display priority of each available rule. The middle platform module may further determine the display priority of each card theme and the prompt statement in each card theme.

It should be noted that in this embodiment of this application, the middle platform module may perform CV analysis based on the triggering of the user or according to the triggering of a pre-configured policy. For example, the pre-configured policy may include: A time is within a preset time period (for example, 00:00 to 02:00), and/or the electronic device is being charged, and/or the electronic device enters a sleep state for more than 30 min, and/or a time since the last CV analysis has reached preset duration, or the like. In some other embodiments, a processing capability of the CV analysis may alternatively be implemented by other functional modules or applications. For example, the processing capability of the CV analysis may be integrated into the gallery application, the smart assistant application, or the like.

Based on the functions executed by the middle platform module, the electronic device may accurately display the interface 11 and the interface 12 shown in FIG. 1 based on information determined by the middle platform module.

The following description uses an example in which the smart assistant application in the electronic device interacts with the middle platform module and/or the gallery application after the user performs a corresponding operation, to implement the displaying of various interfaces. An interaction switching logic for each interface in the embodiments of this application is described in detail. An example in which the electronic device is a mobile phone is used as an example.

In different embodiments of this application, the smart assistant application may be triggered to run in different manners.

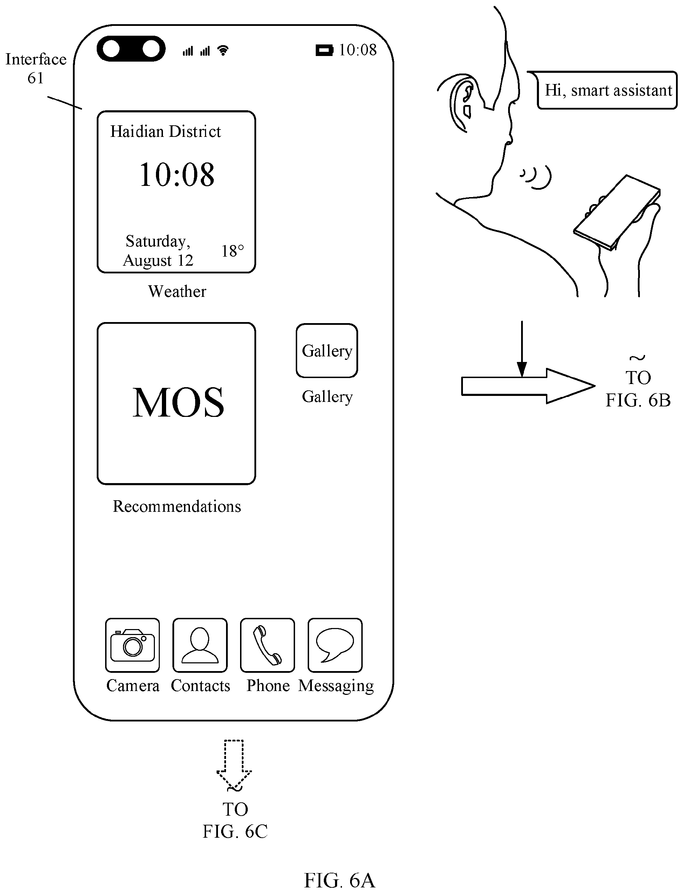

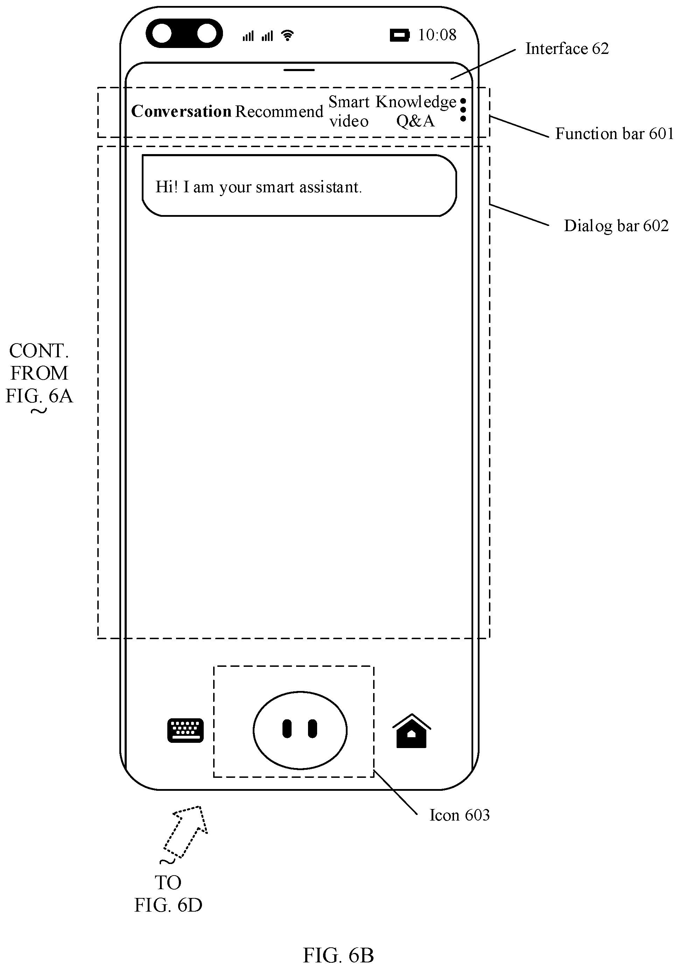

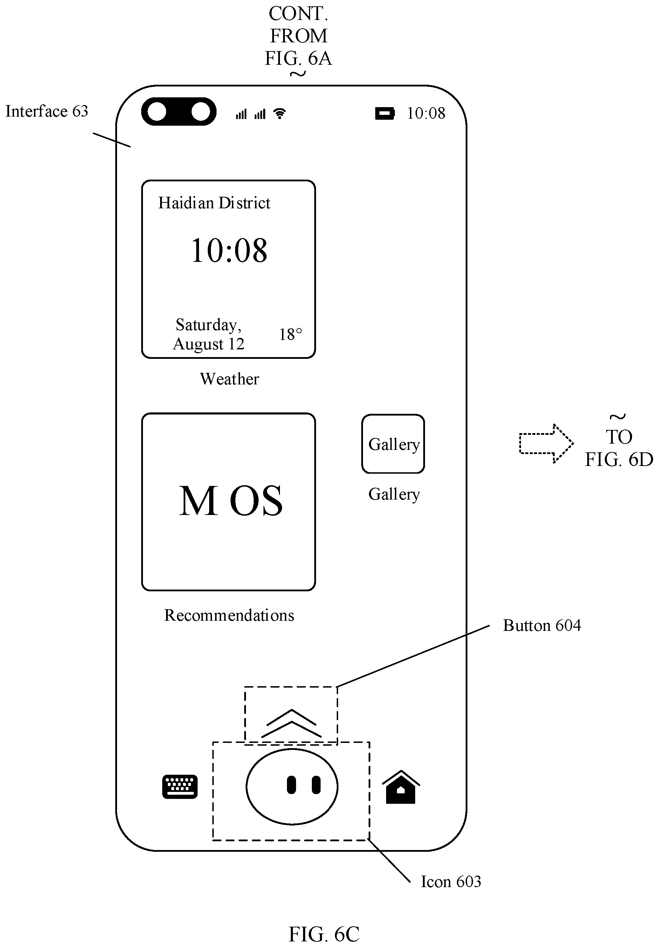

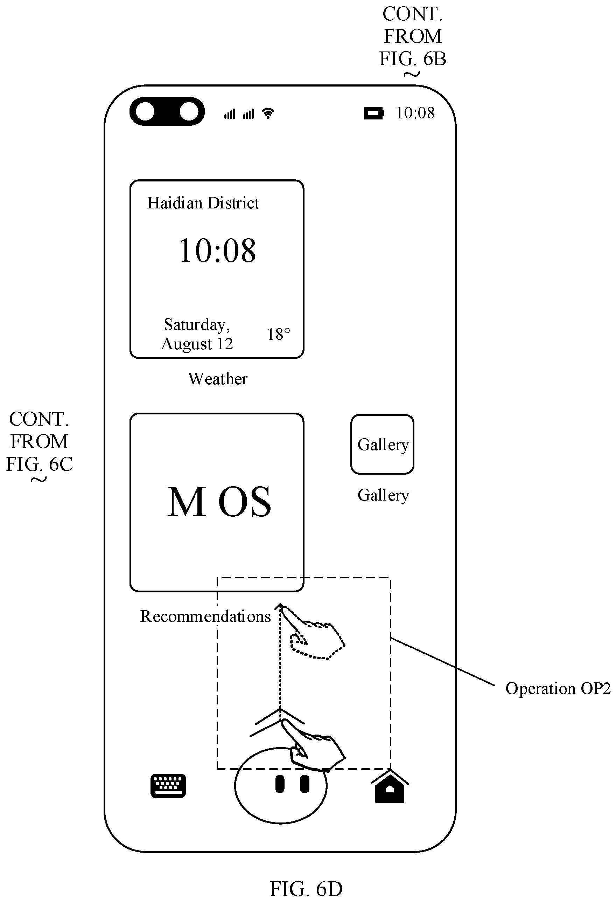

For example, FIG. 6A to FIG. 6D are a schematic diagram of an interface interaction logic according to an embodiment of this application. FIG. 6A to FIG. 6D provide same examples in which a smart assistant is triggered to run.

In this example, an electronic device displaying a main interface (for example, an interface 61) is used as an example.

In some embodiments, a user may input a voice instruction to the electronic device. For example, the user may say to the electronic device: "Hi, smart assistant". In response to the voice instruction, the electronic device may run a smart assistant application and switch to a display interface 62. In some other implementations, the voice instruction may be further configured as another voice instruction. For example, the voice instruction may include information about a name of the smart assistant.

As shown in the interface 62, an interface of the smart assistant application is used as an example.

In this example, the smart assistant application may provide various different simulation functions for the user. For example, a simulation interaction function may include a conversation function, a recommendation function, a smart video function, a knowledge Q&A function, and the like.

Correspondingly, the interface 62 may include a function bar 601. The function bar 601 may include function options corresponding to the above simulation functions. When one function option is in an active state, the one function option may be displayed, on the function bar 601, as display effect that is different from display effect of another function option in an inactive state. For example, in the interface 62, the conversation function is in the active state, while the recommendation function, the smart video function, the knowledge Q&A function, and the like are in the inactive states. In this way, the function option of the conversation function in a function bar 601 may be displayed with display effect such as a larger font size and a bold text. Therefore, the user may clearly determine, based on the display effect of the function bar 601, a currently activated function option.

In combination with the voice instruction input by the user, after running, the smart assistant application may perform a corresponding simulated conversation function in an interface 62 of the conversation function. For example, a dialog bar 602 is displayed in the interface 62. In the dialog bar 602, the smart assistant may display text information corresponding to the voice instruction input by the user. For example, "Hi! I am your smart assistant." is displayed in the dialog bar 602. Therefore, in the conversation function, the smart assistant may provide the conversation function to the user in a form of a display interaction of the dialog bar.

It should be noted that in this application, after the smart assistant application runs, the corresponding interface 62 may further display a corresponding special icon of the smart assistant application. Therefore, the user may know that the smart assistant is running currently.

For example, the corresponding feature icon of the smart assistant may be an icon 603 in the interface 62. The icon 603 may be an interactive icon. When the user performs different operations, the icon 603 may be correspondingly displayed in different states. For example, when the user performs a tap operation on the icon 603, the icon 603 may be displayed as an expression state of "listening", thereby simulating a conversation state with the user. Correspondingly, the smart assistant may control the electronic device to prepare for receiving an operation that needs to be performed by the user, and respond correspondingly.

An example shown in FIG. 6A to FIG. 6D further provides another interaction example of running the smart assistant application.

When the electronic device displays the interface 61, the user may perform an operation of triggering and running the smart assistant application. The operation may be pre-configured. For example, the operation may be configured as pressing a power-off button for 3 seconds, and the like.

Correspondingly, the electronic device may switch to display an interface 63. In the interface 63, the electronic device may display, at a top of an upper layer of the interface 61 (for example, at a top of a lower half part of a display), the special icon 603 corresponding to the smart assistant application. The displaying of the icon 603 may indicate that the smart assistant application has started running.

A button 604 may be further displayed on the icon 603. The button 604 is an interface display entry provided for the user. When the user needs to view the interface of the smart assistant application on the electronic device, the user may perform an operation on the button 604 to achieve the objective.

For example, the user may perform an operation OP2 on the button 604. The operation OP2 may be an operation of pressing and swiping upward the button 604. The corresponding electronic device may switch to display a conversation function interface shown in the interface 62.

It should be noted that in the example shown in FIG. 6A to FIG. 6D, an example in which a default display interface of the smart assistant application (for example, the interface 62) is the conversation function interface is used for description. In some other embodiments of this application, after the smart assistant application runs and displays the corresponding interface, the interface may also be an interface corresponding to the another function option.

After the smart assistant controls the electronic device to display the interface 62, the user may further indicate, by performing another operation in the interface, the electronic device to switch to display the interface of the another function option.

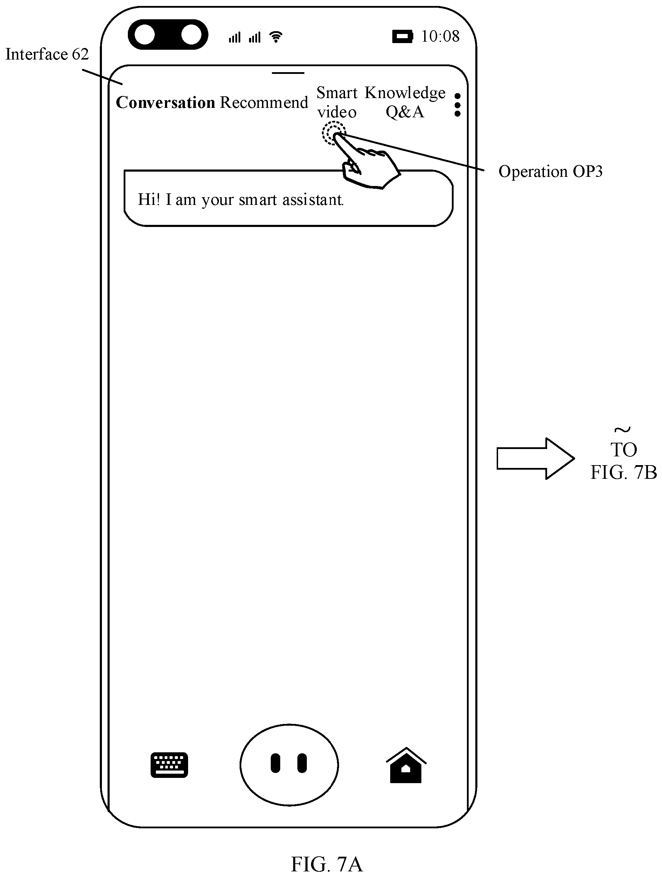

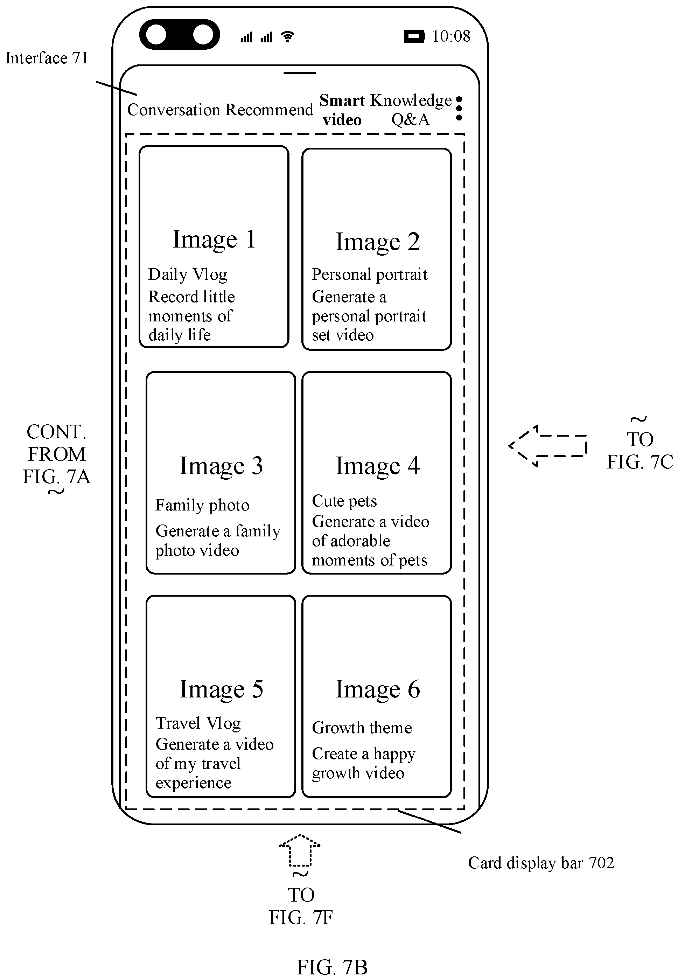

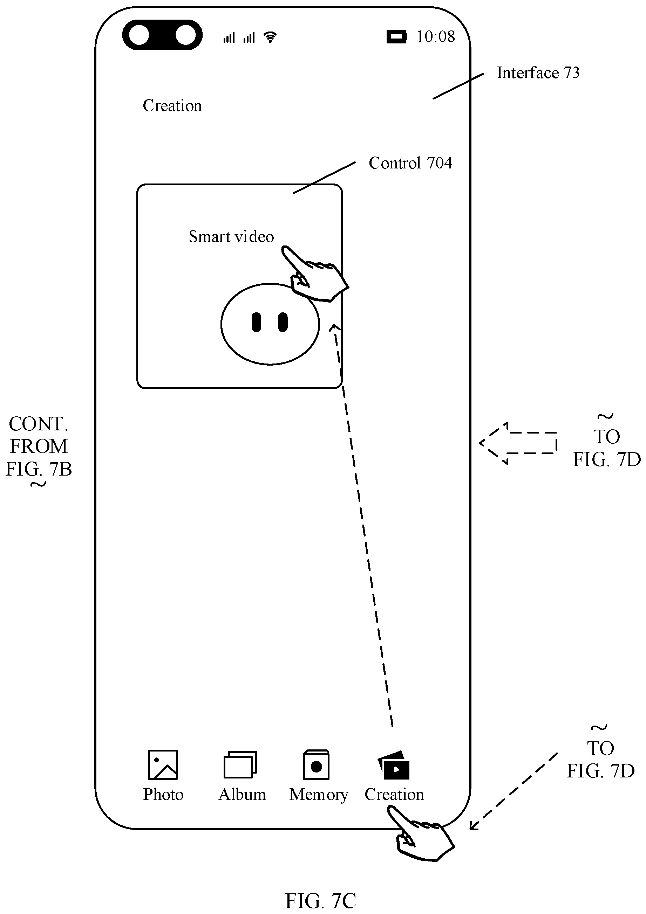

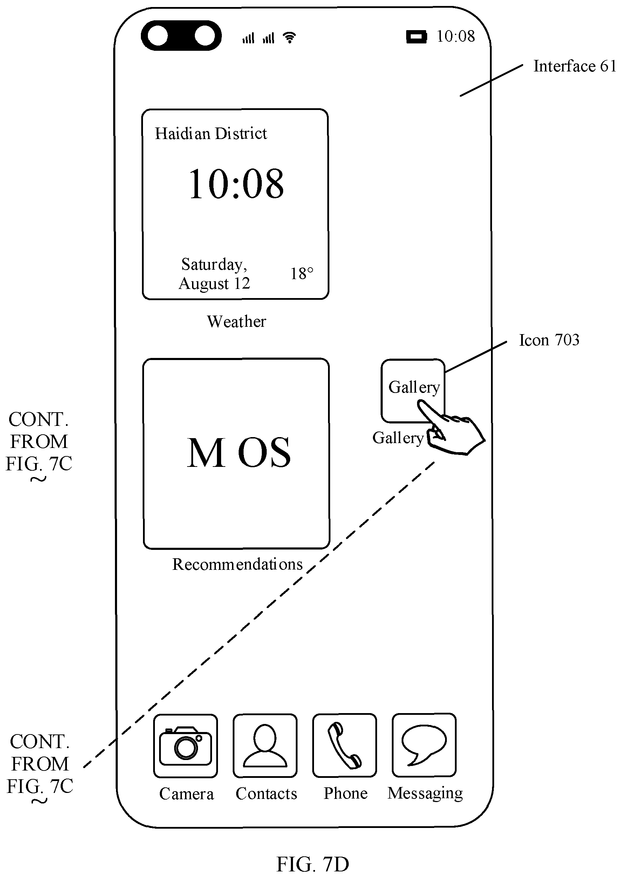

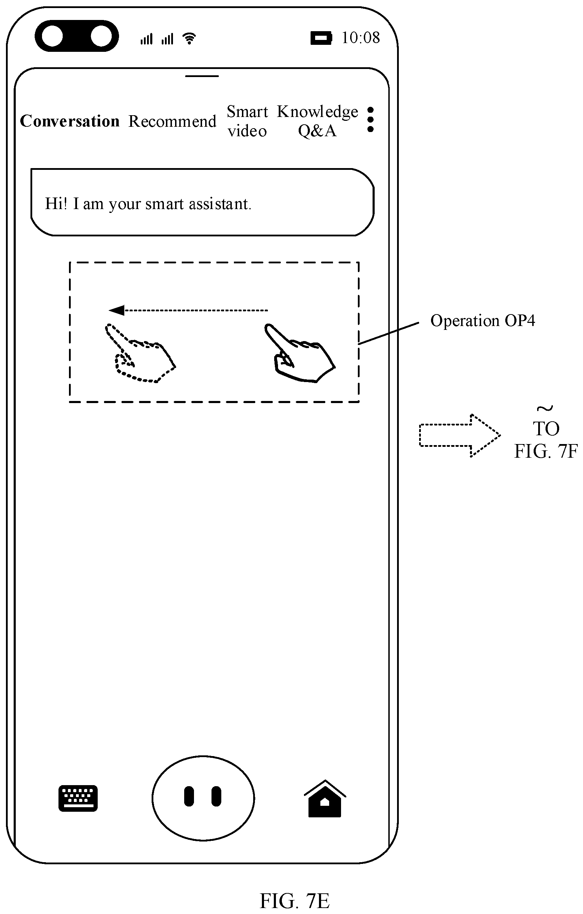

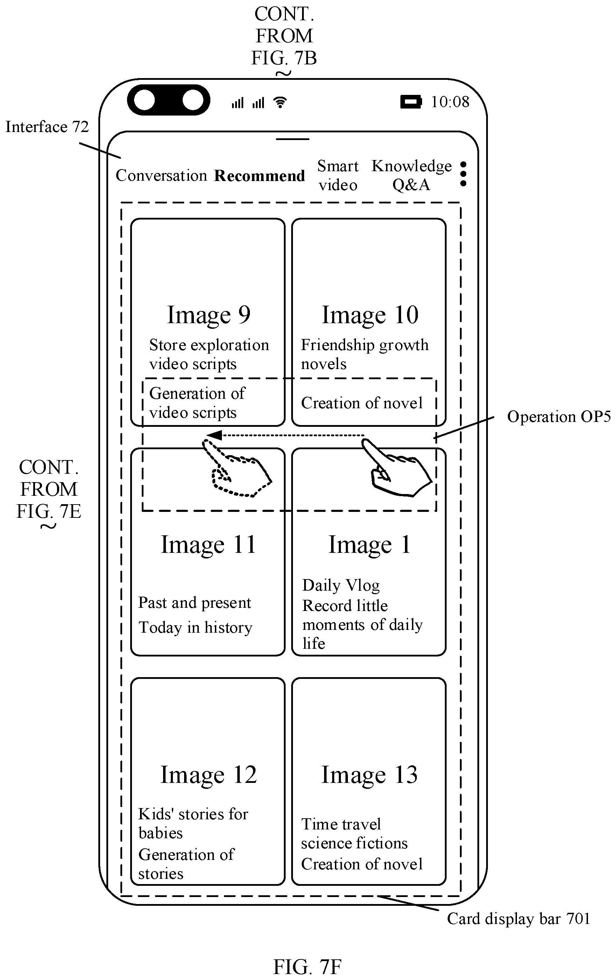

For example, FIG. 7A to FIG. 7F use an example of an interface in which the user indicates the electronic device to display the smart video function for description.

In some embodiments, in the interface 62, the user may perform an operation OP3, to correspondingly indicate the electronic device to display the interface of the smart video function. For example, the operation OP3 may include a tap operation performed on a function option of the "smart video" in the function bar 601.

In response to the operation OP3, the smart assistant may indicate the electronic device to switch to display the interface 71. The interface 71 may be the interface of the "smart video" function. With reference to the description in FIG. 1, the interface 71 may further correspond to the interface 11 in FIG. 1.

In some other embodiments, in the interface 62, the user may perform an operation OP4, to correspondingly indicate the electronic device to display an interface of another function. For example, the operation OP4 may include a leftward swiping operation in the dialog bar 602.

In an example of the function bar 601 in the interface 62, an example in which a display sequence of the function options of conversation, recommendation, smart video, and knowledge Q&A from left to right is used. Correspondingly, the user may perform the operation OP4 based on the sequence of the function options. For example, when the user needs to view an interface of a function option that is on a right side of the currently activated function option, the user may perform the leftward swiping operation on a current content interface (for example, the dialog bar 602 in the conversation function).

In response to the operation OP4, the smart assistant may indicate the electronic device to display the interface of the function option that is on the right side of the currently activated function option (for example, the conversation function). For example, the smart assistant may indicate the electronic device to display the interface 72. The interface 72 may be an interface corresponding to the recommendation function.

In this application, the recommendation function of the smart assistant may recommend a plurality of different types of images/videos based on local/network resources.

For example, in this example, the interface 72 of the recommendation function may include a recommendation card for "Store exploration video scripts" (for example, a background image in the recommendation card may be displayed as an image 9), a recommendation card for "Friendship growth novels" (for example, a background image in the recommendation card may be displayed as an image 10), a recommendation card for "Past and present" (for example, a background image in the recommendation card may be displayed as an image 11), a recommendation card for "Daily Vlog" (for example, a background image in the recommendation card may be displayed as an image 1), a recommendation card for "Kids' stories for babies" (for example, a background image in the recommendation card may be displayed as an image 12), a recommendation card for "Time travel science fictions" (for example, a background image in the recommendation card may be displayed as an image 13), and the like.

It may be understood that in some implementations, at least one recommendation card included in the interface 72 of the recommendation function may be from capabilities provided by other function options. For example, the recommendation card for "Daily Vlog" may be obtained from a capability of the smart video function. In the interface 72, the recommendation card for "Daily Vlog" may be a card that is recommended based on the local resource (for example, an image stored in a gallery). Based on the recommendation card for "Daily Vlog", an entry for obtaining a capability of intelligently generating a corresponding video file may be provided for the user.

It should be noted that in this application, when the smart assistant application displays interfaces of different function cards, content interfaces may vary because content to be displayed is different. For example, in the interface 62 of the conversation function, the content interface may include the dialog bar 602 shown in FIG. 6A to FIG. 6D. For another example, in the interface 72 of the recommendation function, the content interface may include a card display bar 701. This card display bar may include a plurality of recommendation cards. For another example, in the interface 71 of the smart video function, the content interface may include a card display bar 702. The card display bar may include a plurality of scene cards.

In the interface 72, the user may further perform an operation OP5, to indicate the electronic device to switch to display the interface of the smart video function. For example, the operation OP5 may include a leftward swiping operation performed on the card display bar 701. It may be understood that, similar to the description related to the operation OP4, the smart assistant application may indicate, in response to the operation OP5, indicate the electronic device to switch to display the interface of the smart video function that is on a right side of the recommendation function.

Therefore, the user may indicate, by performing the operation OP4 and the operation OP5, the electronic device to display the interface 71 of the smart video function.

In the foregoing example, after the interface of the smart assistant is entered, two interaction examples for displaying the interface of the smart video function are provided. In some other embodiments, the electronic device further provides other entries for displaying the interface of the smart video function.

The electronic device displaying the main interface (for example, the interface 61) is used as an example. The interface 61 may include one or more application icons. The interface 61 including an icon 703 of a gallery application is used as an example. The user may tap the icon 703 to indicate the electronic device to enter the gallery application. Correspondingly, the electronic device may display an interface of the gallery application. The interface (for example, at a bottom of the interface) of the gallery application may display different function options. For example, the function options may include Photo, Album, Memory, Creation, and the like.

In some implementations, after being started, the gallery application may display an interface corresponding to a "Photo" function option. The interface may include one or more thumbnails of photos that have been shot. Correspondingly, the gallery application may enter an interface 73 corresponding to a "Creation" function option under the indication (for example, tapping the Creation function option) of the user.

In some other implementations, after being started, the gallery application may indicate the electronic device to display the interface 73 corresponding to the "Creation" function option.

In this example, the gallery application may display an entry for the smart video function in the interface 73. For example, the interface 73 may display a control 704. In this way, when the user needs to perform further processing on the image that is stored in the gallery, the user may quickly enter a corresponding function interface via the control 704. For example, the user may tap the control 704 to indicate the electronic device to display the interface of the smart video function.

In response to the tap operation performed on the control 704, the electronic device may run the smart assistant application, and display the interface 71 corresponding to the smart video function under the control of the smart assistant application.

In combination with the CV processing and the description of the interface 11, in this application, the displaying of the interface 71 may be implemented based on a CV processing result.

For example, the interface 71 may display one or more scene cards. For composition of each scene card, refer to the description in FIG. 4. For example, each scene card may include a background image, a card theme, and a prompt statement. The background image in the scene card may be a preset background image that is in a one-to-one correspondence to the card theme. In some implementations, the prompt statement may be displayed as a pre-configured prompt statement corresponding to the card theme. In some other implementations, the prompt statement may be flexibly adjusted based on a name of a display column that is included in a current card theme and that may generate a video file.

In addition, as shown in an example in FIG. 5, the electronic device may pre-store a plurality of scene cards for display when the interface of the smart video function needs to be displayed.

In some embodiments, in the interface 71, a display sequence of the scene cards may correspond to CV analysis results.

For example, based on the CV analysis, a middle platform module may determine a quantity of available rules included in each scene card. When the quantity of available rules is larger, a quantity of video files that may be generated in the scene card is larger. In this way, the middle platform module may sort the scene cards in descending order based on the quantity of available rules. Therefore, when the smart assistant needs to display the interface of the smart video, a sorting result of the scene cards may be obtained from the middle platform module, and the electronic device is indicated to display based on the sorting result.

In this application, two or more scene cards may be displayed in a same row. In this way, display priorities may be sorted from high to low: in the same row, display priorities decrease in sequence from left to right. In addition, in different rows, the display priorities decrease in sequence from top to bottom.

With reference to the example of interface 71 in FIG. 7A to FIG. 7F, the smart assistant application may determine, based on the sorting result (for example, the display priority) from the middle platform module, that a display priority of a scene card of "Daily Vlog" may be higher than a display priority of "Personal portrait". Therefore, when the scene cards of "Daily Vlog" and "Personal portrait" are displayed in a same row, the scene card of "Daily Vlog" may be displayed on a left side of "Personal portrait". The smart assistant application may determine that the display priority of the scene card of "Daily Vlog" may be higher than a display priority of "Family photo". Therefore, when the scene cards of "Daily Vlog" and "Family photo" are displayed in different rows, the scene card of "Daily Vlog" may be displayed above "Family photo". By analogy, the smart assistant may control the electronic device to display the interface of the smart video function based on the display priority of each scene card.

In some other embodiments of this application, in the interface 71, the display sequence of the scene cards may be further related to other factors.

For example, in some implementations, for scene cards with a same display priority, the middle platform module (or the smart assistant application) may determine the display sequence of the scene cards based on a quantity of images corresponding to all available rules included in the scene cards. For example, a display sequence of scene cards that include more images is configured closer to the front.

In some implementations, for scene cards with a same display priority and a same quantity of included images, the middle platform module (or the smart assistant application) may determine the display sequence of the scene cards based on an obtaining time of the image included in the scene cards. For example, when an image with a later obtaining time (that is, closer to a current time) is included, a display sequence of corresponding scene cards is configured closer to the front.

It may be understood that in some other cases, if the electronic device does not perform CV analysis currently, or if there are few (for example, less than a preset threshold of the quantity) or no available images used for CV analysis, the middle platform module may not obtain the CV analysis result. Correspondingly, when the smart assistant needs to display the interface of the smart video function, the middle platform module may send the pre-configured display sequence of each scene card to the smart assistant. Therefore, the smart assistant may control the electronic device to display based on the pre-configured display sequence of each scene card.

In some embodiments of this application, any one of the operations of triggering the display interface 71 shown in FIG. 7A to FIG. 7F may be referred to as a first operation. Correspondingly, the smart video function may be referred to as a first function. The interface 71 may be referred to as a first interface. Accordingly, the interface 71 may include a first scene card and a second scene card. The first scene card may be a scene card displayed before the second scene card. For example, the first scene card may be "Daily Vlog", and the second scene card may be "Personal portrait". For another example, the first scene card may be "Growth theme", and the second scene card may be a subsequently displayed scene card.

The displaying of the interface of the smart video function in this embodiment of this application is described in detail based on the internal processing mechanism and the interface interaction logic. This embodiment of this application further provides an interactive display logic based on the operation performed by the user on the scene card.

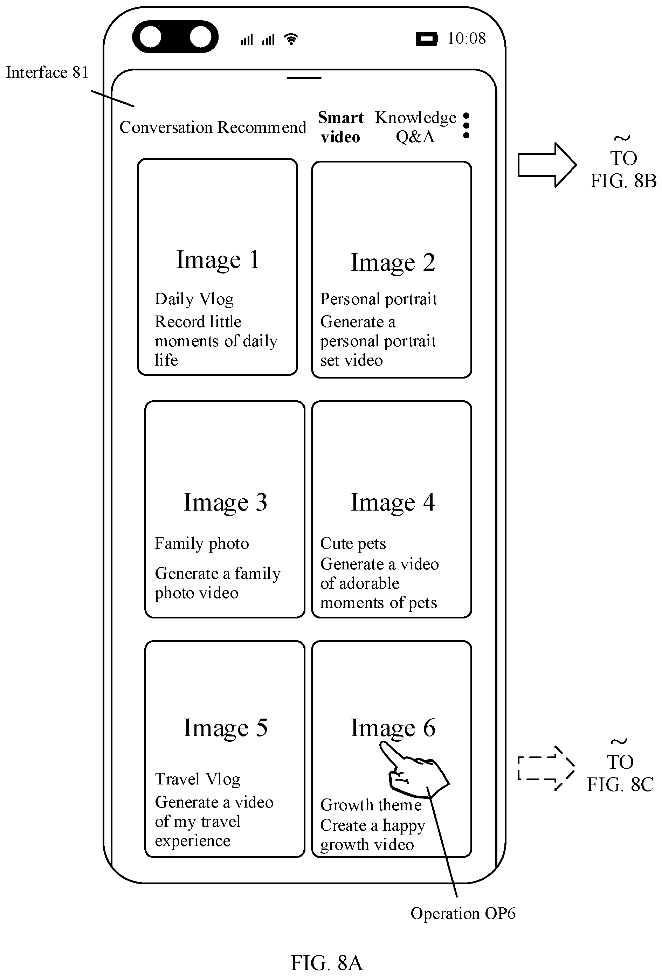

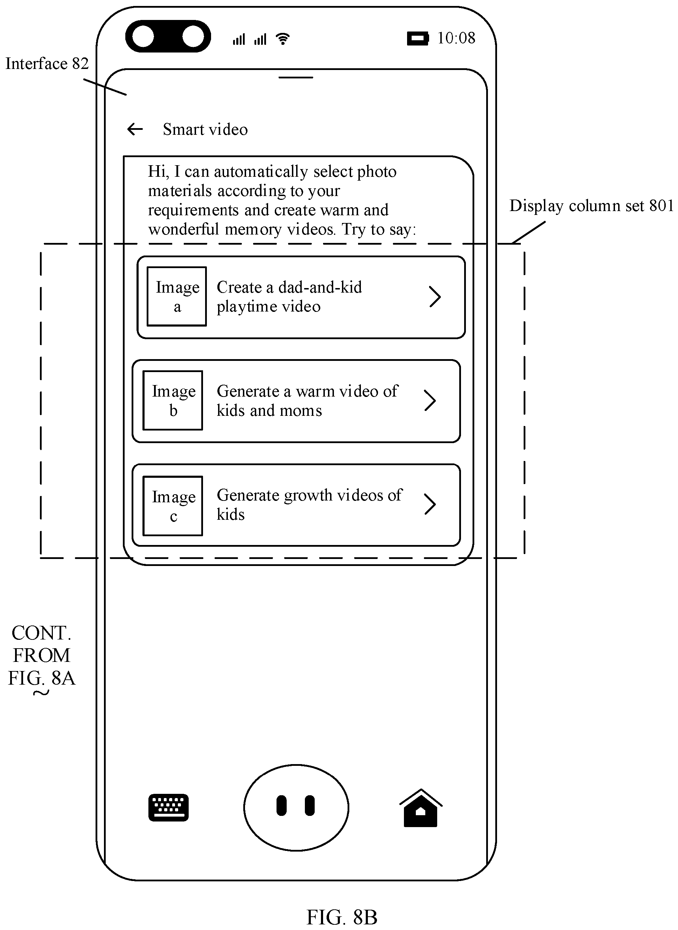

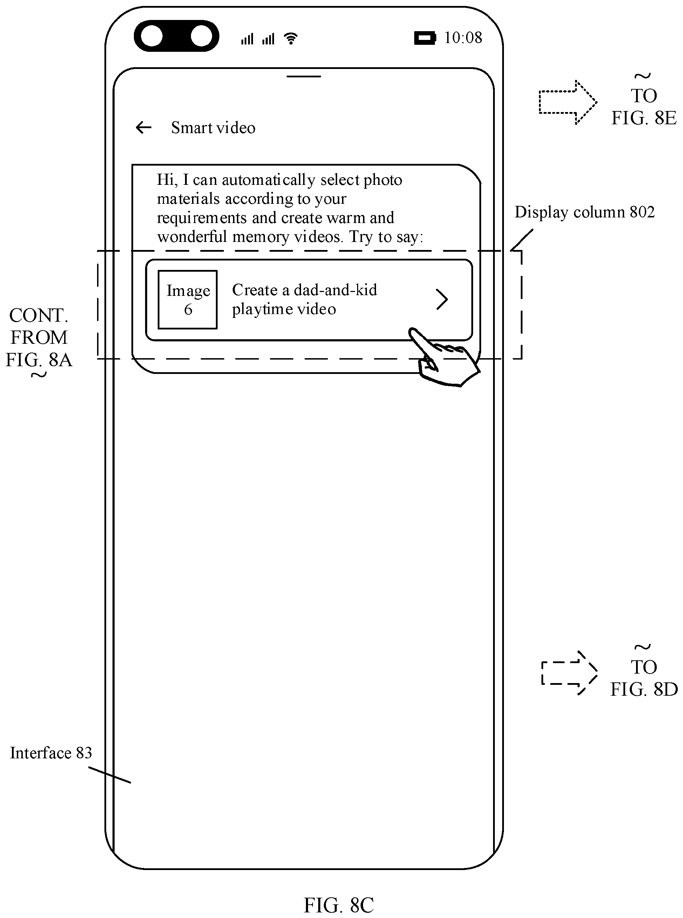

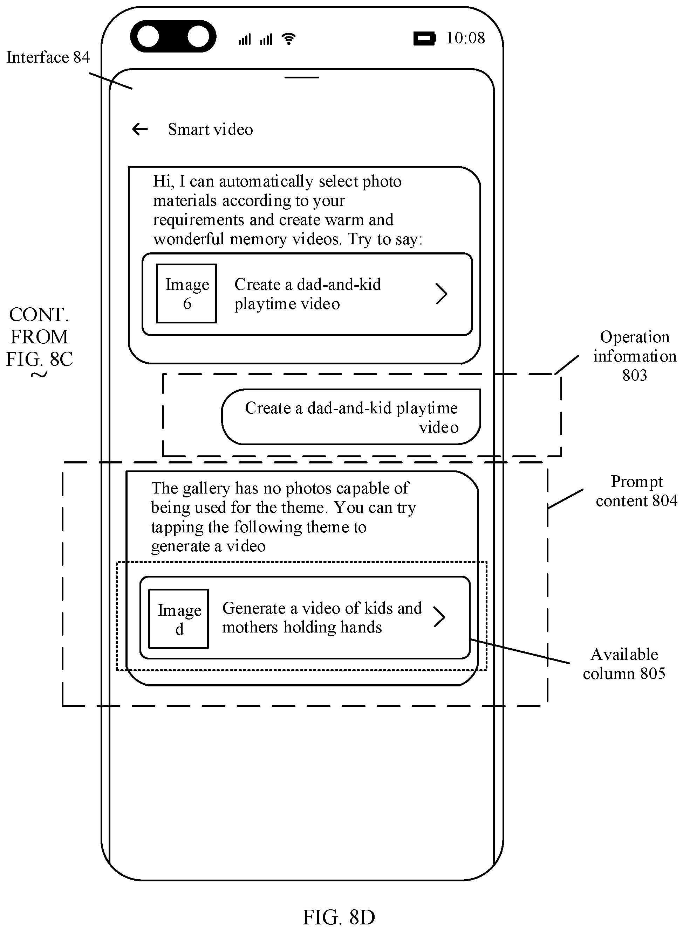

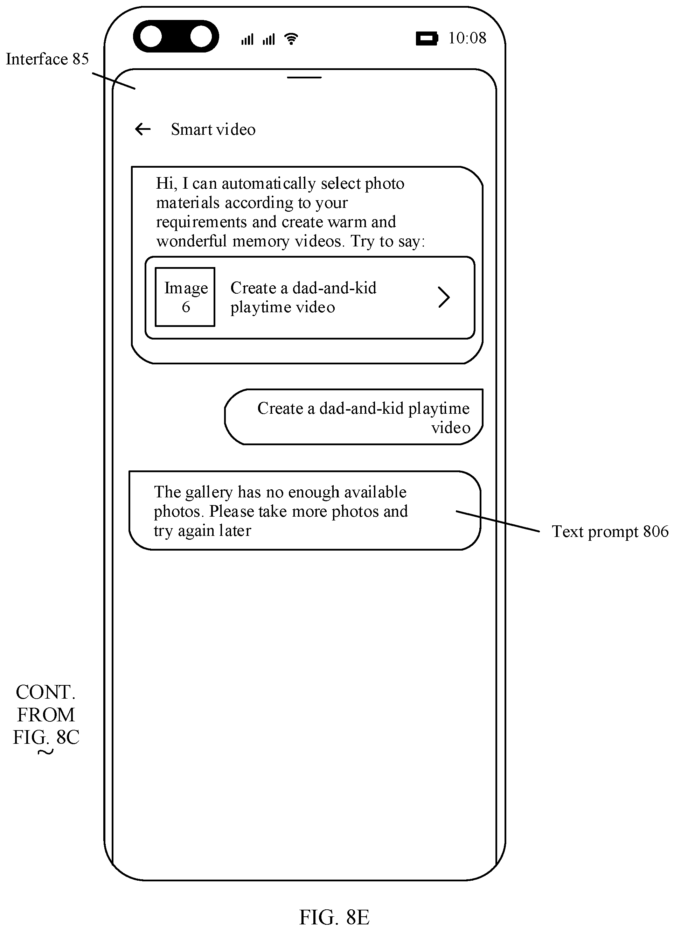

For example, FIG. 8A to FIG. 8E are a schematic diagram of another interface interaction logic according to an embodiment of this application.

In an example shown in FIG. 8A to FIG. 8E, the user may tap any scene card in the interface (for example, an interface 81) of the smart video function, thereby further triggering related processing and displaying in this scene. The interface 81 may correspond to the interface 71 shown in FIG. 7A to FIG. 7F.

As shown in FIG. 8A to FIG. 8E, an operation OP6 performed by the user in the interface 81 is used as an example. The operation OP6 may be a tap operation performed on any scene card in the interface 81. For example, the operation OP6 may be a tap operation performed on a scene card of "Growth theme". In some implementations, the scene card of "Growth theme" may be referred to as a third scene card. The operation OP6 may be referred to as a second operation.

In response to the operation OP6, the smart assistant application may control the electronic device to perform a corresponding interface response.

For example, in some embodiments, the smart assistant may indicate, in response to the operation OP6 of the user, the electronic device to switch to display the interface 82.

In this example of the interface 82, the smart assistant may display, to the user, a dialog bar including a display column set 801. The display column set 801 may include a preset quantity of display columns. The preset quantity may also be referred to as a maximum quantity of display columns.

Each display column included in the display column set 801 may correspond to one correspondingly configured available rule in a current scene card.

For example, the current scene card may be "Growth theme". In combination with the foregoing description of the CV analysis, the middle platform module may aggregate, based on each rule in the growth theme, all images that are configured with labels, to obtain an available image set corresponding to each rule in the growth theme. In this way, the middle platform module may determine all available rules in a current growth theme and an available image set corresponding to the available rules. The middle platform module may further determine a name of a display column corresponding to each available rule. The middle platform module may further determine, during displaying, display priorities of display columns corresponding to all available rules.

In this way, when needing to display the interface 82 (for example, after the smart assistant receives the operation OP6), the smart assistant may obtain, from the middle platform module, a display column corresponding to the growth theme and a display priority of each display column.

The preset quantity is 3 is used as an example. The middle platform module determines, by performing CV analysis, that the name of the available display column under the growth theme includes: "Create a dad-and-kid playtime video", "Generate a warm video of kids and moms", "Generate growth videos of kids", and the like.

In this way, the middle platform module may send names of the three display columns and information about the available images included in the display columns to the smart assistant. The middle platform module may further send display priorities of the three display columns to the smart assistant.

Correspondingly, the smart assistant may indicate, based on the received information, the electronic device to display the interface 82 in FIG. 8A to FIG. 8E. When the display priority is higher, a position of a corresponding display column is closer to the front in the display column set 801. A display column with a highest display priority in the display column set 801 may be referred to as a first display column.

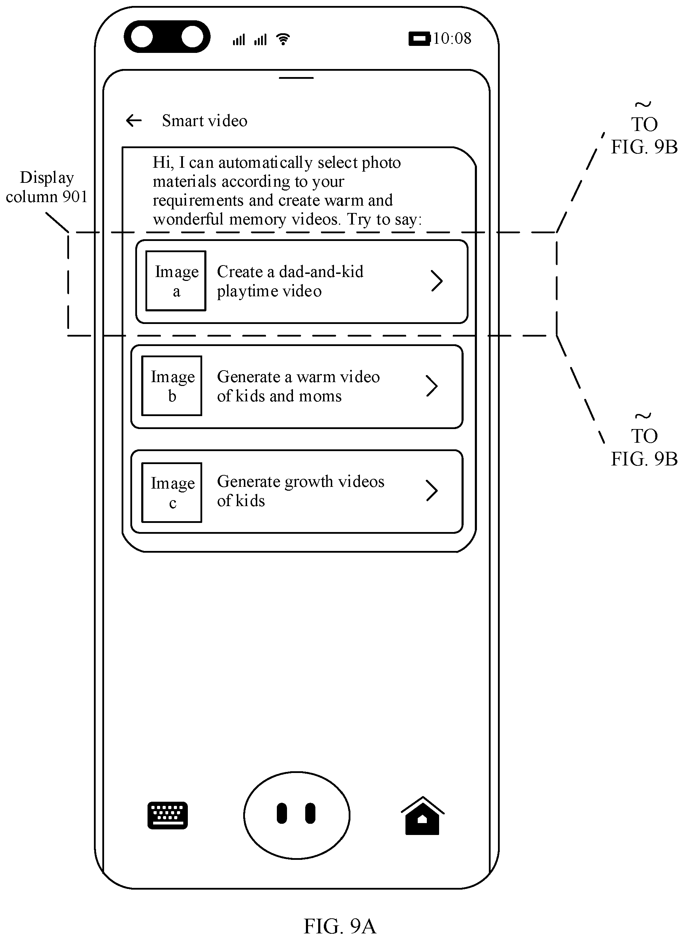

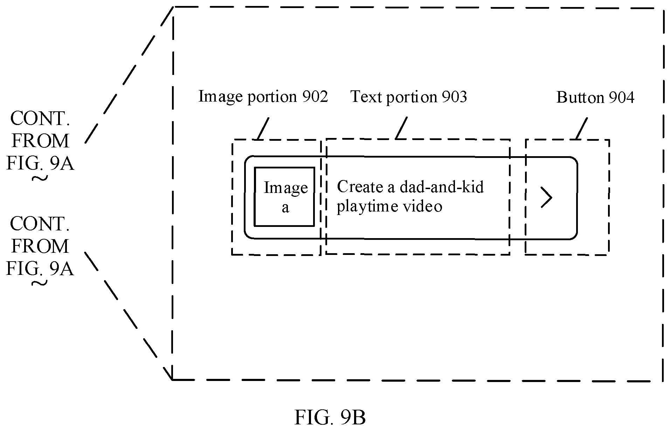

The display column set 801 in FIG. 8A to FIG. 8E is described with reference to FIG. 9A and FIG. 9B.

As shown in FIG. 9A and FIG. 9B, an example in which a display column 901 of "Create a dad-and-kid playtime video" in the display column set 801 is used as an example.

The display column 901 may include at least an image portion 902 and a text portion 903.

The image portion 902 may correspond to a highlight image in an available image set (for example, an image set 91) corresponding to the display column 901. In some embodiments, the middle platform module may select the highlight image (for example, an image a) from the image set (for example, the image set 91) corresponding to the current display column 901 based on a pre-configured decision logic of the highlight image. The middle platform module may further send image information (for example, an image ID) of the highlight image to the smart assistant, so that the smart assistant takes the highlight image as the image portion 902 of the display column 901 during display.

Similarly, a thumbnail in a display column of "Generate a warm video of kids and moms" may be a highlight image (for example, an image b) in a corresponding image set; and a thumbnail in a display column of "Generate growth videos of kids" may be a highlight image (for example, an image c) in a corresponding image set.

The text portion 903 may be correspondingly displayed as a name corresponding to the display column 901. For a manner of obtaining a specific name, refer to the foregoing related description. Details are not described herein again.

In some embodiments, the display column 901 may further include a button 904. The button 904 may be used to trigger further processing performed on the display column 901. For example, after the user taps the button 904, the smart assistant may indicate the electronic device to perform video composition processing on the image set 91 corresponding to the display column 901. In this way, a video file corresponding to the image set 91 is obtained, that is, smart videos for the image set 91 are completed.

It may be understood that this is different from displaying different scene cards in the interface 81. In this embodiment of this application, when the available display column may be obtained by performing CV analysis, the image portion of the display column may be replaced with the highlight image in the corresponding image set, and the background image in each scene card is displayed as a preset image.

In this way, in an example of the interface 82 shown in FIG. 8A to FIG. 8E, when the CV analysis is completed and an available display column in at least one current scene card is obtained, the smart assistant may control the electronic device to display each available display column. In addition, when the interface 81 is displayed, a prompt statement displayed under the card theme may be replaced with a name of the display column with a highest display priority in the available display column.

For example, as shown in the interface 82, an example in which display priorities of "Create a dad-and-kid playtime video", "Generate a warm video of kids and moms", and "Generate growth videos of kids" descend in sequence is used. In the interface 81, the prompt statement of the growth theme may be displayed as "Create a dad-and-kid playtime video".

It should be noted that in some embodiments of this application, when there are more than three available display columns in a scene card (for example, the scene card of the growth theme) corresponding to the operation OP6 performed by the user, the smart assistant may display three available display columns with a highest priority in the interface 82. Thereafter, after the user performs the operation OP6 next time, the smart assistant may perform rotation display on all available display columns.

For example, an example in which the available display column includes a display column 1 to a display column 4 and display priorities descend in sequence is used. When the user performs the operation OP6 for the first time, the smart assistant may display the display column 1 to the display column 3 in the interface 82. When the user performs the operation OP6 for the second time, the smart assistant may display other display columns in the interface 82 in a manner of rotation display. For example, the smart assistant may display, to the user, the display column 2 to the display column 4 in the display column set 801 of the interface 82. Therefore, the user can view a plurality of different available display columns in the interface 82 after performing a plurality of operations. This enriches the use and selection of the user.

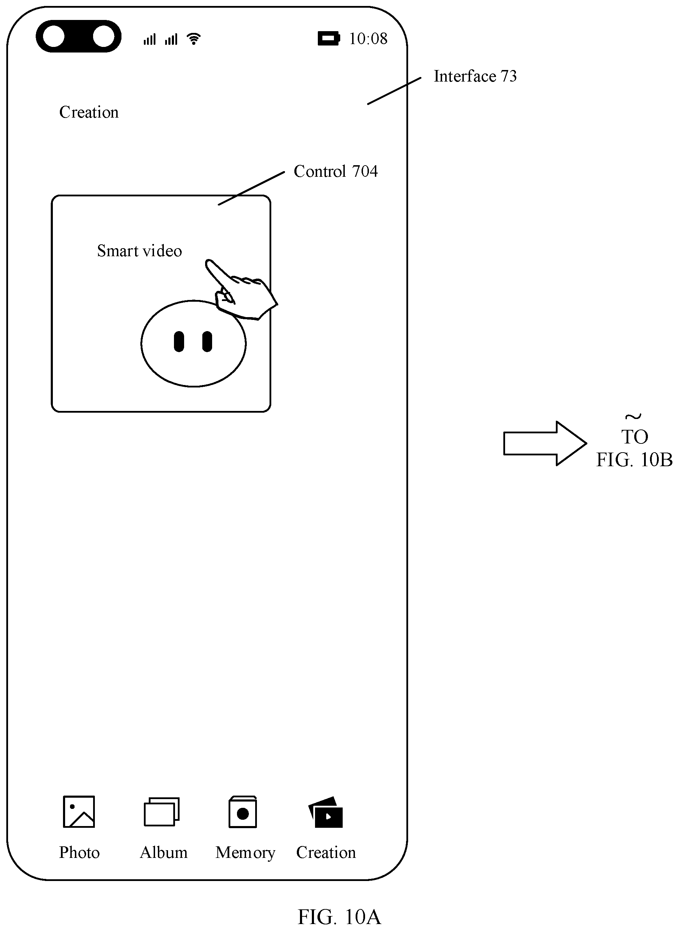

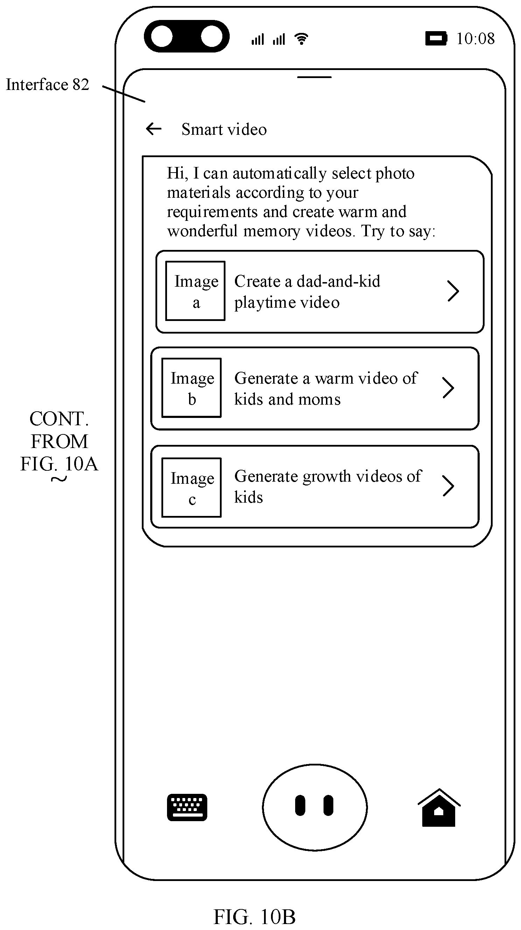

In addition, with reference to the descriptions in FIG. 7A to FIG. 7F and FIG. 8A to FIG. 8E, refer to FIG. 10A and FIG. 10B. In some other embodiments of this application, after receiving the tap operation performed by the user on the control 704 in the gallery application, the electronic device may directly jump to an interface that may display an available display column capable of generating a video after the CV analysis is completed. For example, the smart assistant application may control the electronic device to jump from the interface 73 to the interface 82, and display the display 82. Therefore, efficiency of using the smart video function by the user is improved.

The switching mechanism for displaying the available display column is described by using an example in which the electronic device completes process CV analysis on the growth theme before receiving the operation OP6, and may obtain at least one available display column in the scene card.

In some other embodiments, when the electronic device receives the operation OP6 performed on any scene card and the CV analysis is not completed, or when the electronic device determines, by performing CV analysis, that the scene card indicated by the operation does not include the available display column, the smart assistant may be configured with another display interaction logic.

For example, an example in which the electronic device has completed CV analysis but the growth theme does not include the available display column when the electronic device receives the operation OP6 is used.

As shown in FIG. 8A to FIG. 8E, after receiving the operation OP6, the smart assistant application may control the electronic device to switch to display the interface 83. The interface 83 may include at least one recommended display column 802. The display column 802 may also be referred to as a fourth display column.

It may be understood that, after receiving the operation OP6 performed by the user, the smart assistant may query, from the middle platform module, information about the available display column that corresponds to the growth theme and that is indicated by the operation OP6. Correspondingly, the middle platform module may feed back, to the smart assistant, that the available display column corresponding to the growth theme is empty, or the growth theme does not include the available display column by performing CV analysis.

In this way, the smart assistant may display, in the interface 83 displayed, a pre-configured display column 802 corresponding to the growth theme. For example, the display column 802 may be a pre-configured display column that is named "Create a dad-and-kid playtime video". Being different from the display column shown in the interface 82, a name of the display column 802 may be pre-configured, and is not generated by the middle platform module based on the available image set. In addition, the image portion of the display column 802 may be displayed as a preset image (for example, an image 6) corresponding to the current scene card, and is not a highlight image in the available image set.

Therefore, the smart assistant may indicate, by displaying the interface 83, the user to further perform a subsequent operation.

For example, the user may tap the display column 802. In response to the operation, the smart assistant may control the electronic device to switch to display the interface 84. The tap operation performed on the display column 802 may also be referred to as a third operation.

The interface 84 may display operation information 803. The operation information 803 may correspond to an operation performed by the user on the display column 802. In this way, simulated conversation effect is obtained.

The interface 84 may further include prompt content 804. In this example, the middle platform module of the electronic device has completed the CV analysis, but a label of a scene in which the operation OP6 of the user is correspondingly tapping on the growth theme does not include the available display column. Therefore, after the user performs a tap operation on the display column 802, the smart assistant does not display, to the user, a video file generated corresponding to the display column 802. Correspondingly, the smart assistant may prompt, in the prompt content 804, the user about another available display column that may generate the video file. For example, the prompt content 804 may include an available column 805. The available column 805 may be an available display column that is determined by the middle platform module by performing CV analysis. For example, the available column 805 may be a display column of "Generate a video of kids and mothers holding hands". The available column 805 may also be referred to as a fifth display column. In this example, a thumbnail (that is, an image portion) as which the available column 805 is displayed may be an image d.

In this way, the user may determine, based on a text reminder in the prompt content 804, for example, "The gallery has no photos capable of being used for the theme. You can try tapping the following theme to generate a video", that a video file corresponding to the available column 805 may be obtained although a video file corresponding to the selected "Create a dad-and-kid playtime video" cannot be obtained.

In the display mechanism of switching from the interface. 81 to the interface 83 and to the interface 84 shown in FIG. 8A to FIG. 8E, an example in which the CV analysis has been completed is used for description.

In some other embodiments, when the electronic device has no enough images, the CV analysis may not be performed. Therefore, the displaying may not be correspondingly recommended according to the above solution.

For example, in this case, after the user taps on the display column 802, the smart assistant application may indicate the electronic device to switch to display the interface 85. The interface 85 may include a text prompt 806. Text prompt 806 may prompt the user about "The gallery has no enough available photos. Please take more photos and try again later". This enables the electronic device to obtain more images, and perform, according to the foregoing examples, appropriate sorting and displaying. The interface 85 may also be referred to as a fourth interface. The text prompt 806 may also be referred to as first prompt information.

In some other embodiments, when the electronic device receives the operation OP6 performed by the user, the electronic device has images but the CV analysis is not completed.

In this case, the smart assistant application may be further configured with a corresponding interaction logic, to guide the user to trigger the CV analysis. It may be understood that in this example, because the electronic device does not complete the CV analysis, scene cards in the interface 81 displayed when the operation OP6 is received may be displayed in a default preset sequence.

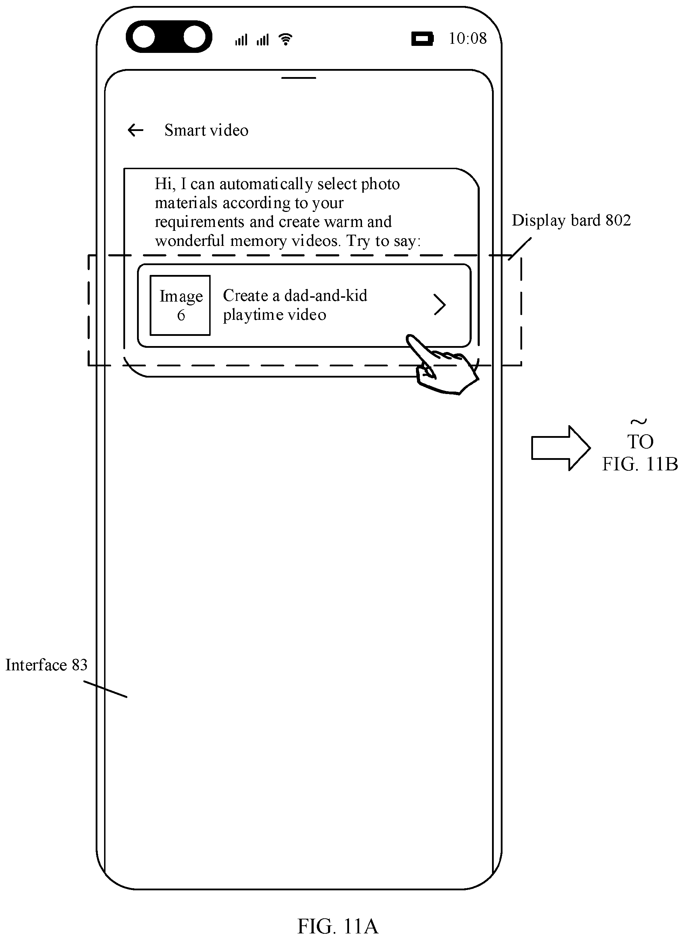

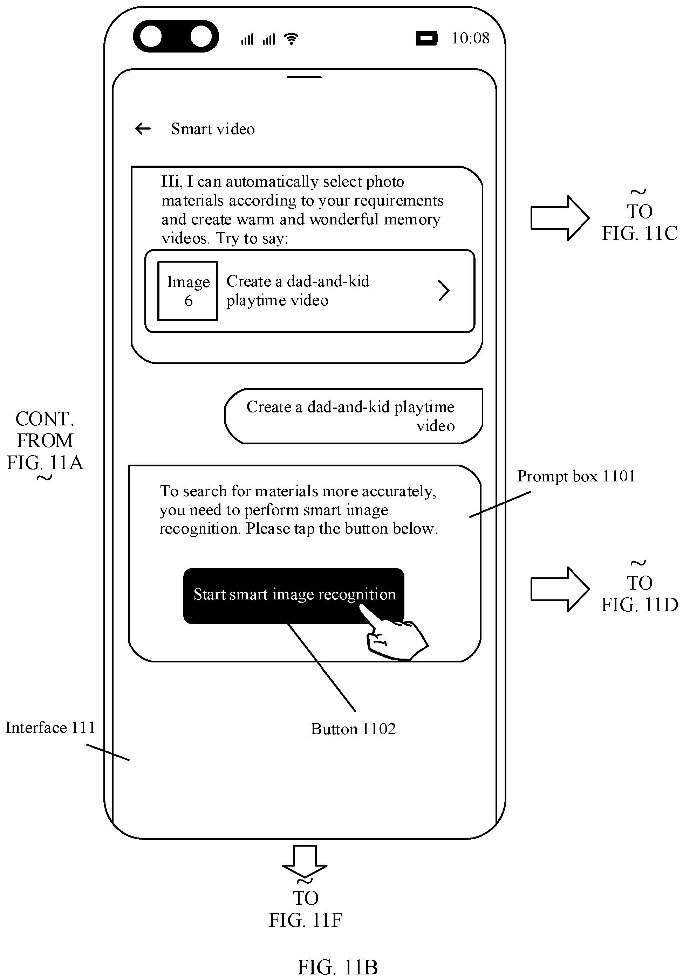

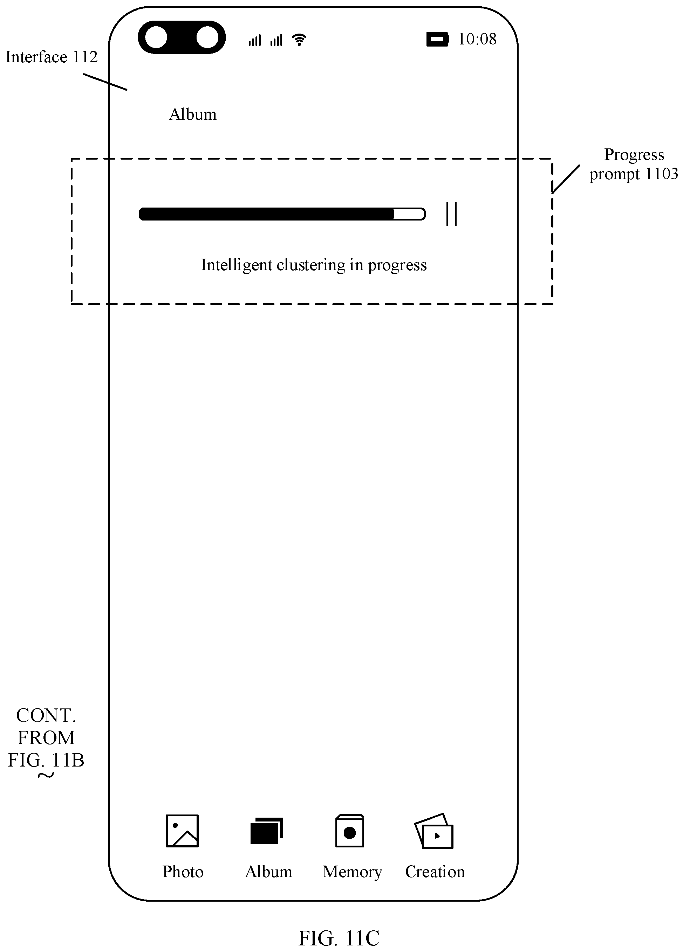

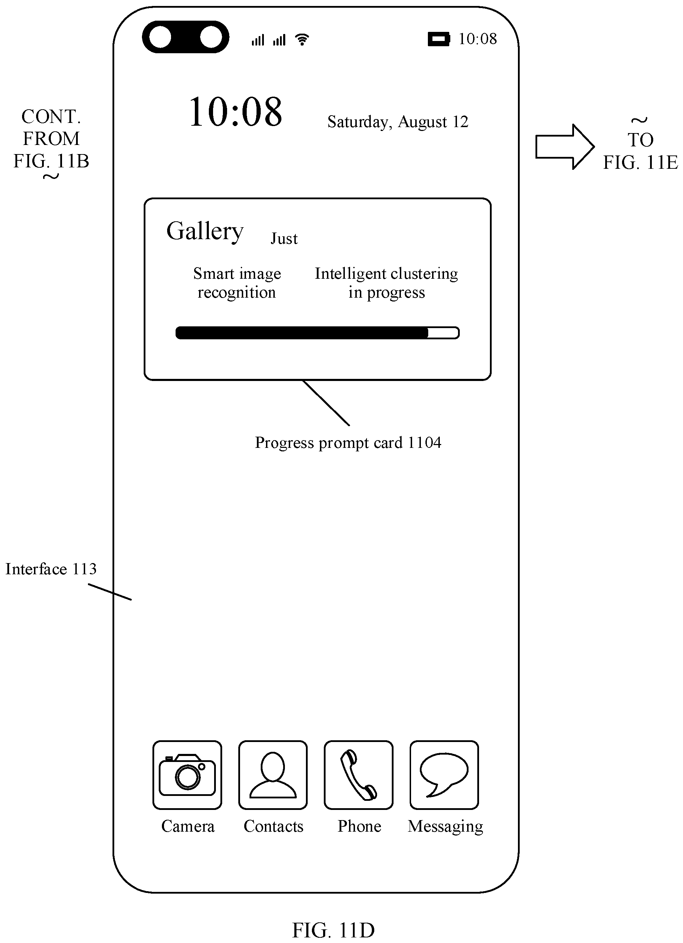

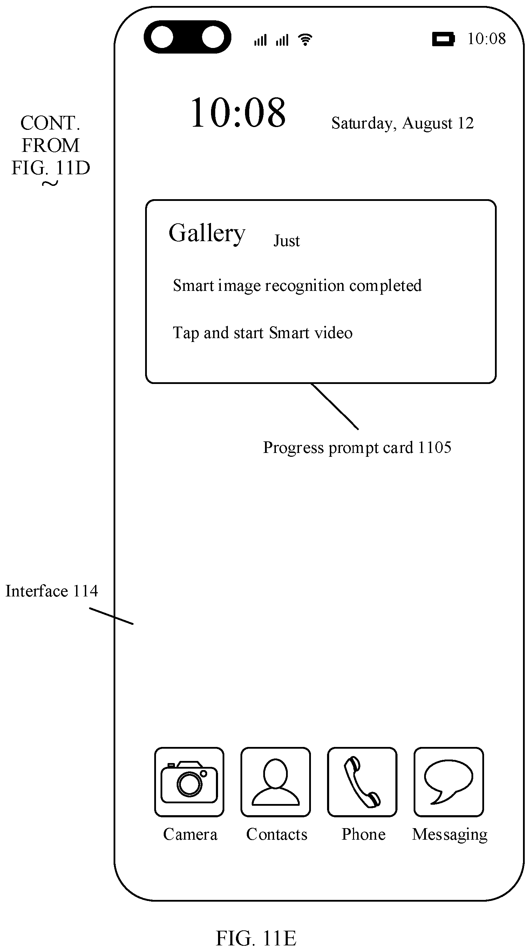

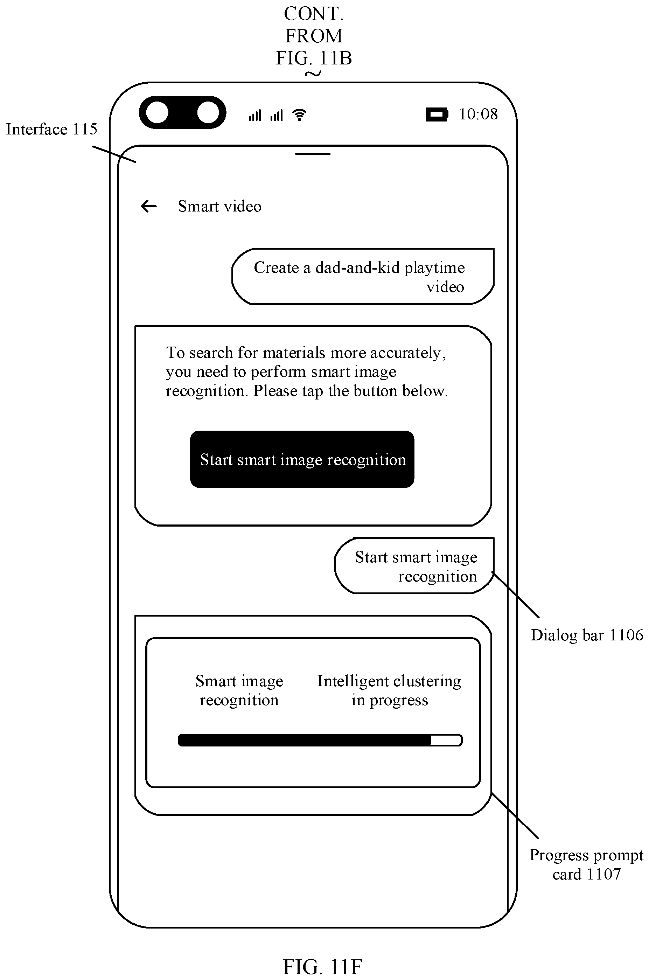

For example, refer to FIG. 11A to FIG. 11F. The user tapping the display column 802 in the interface is used as an example.

The smart assistant application may switch to display the interface 111 after receiving the tap operation performed by the user on the display column 802. In this example, the interface 111 may further include operation information 803 shown in FIG. 8A to FIG. 8E, thereby achieving experience of simulated conversation.

The interface 111 may further include a prompt box 1101. Being different from the prompt content 804 shown in FIG. 8A to FIG. 8E, in this example, because the electronic device does not complete (or does not perform in preset duration) the CV analysis, the smart assistant application may control the electronic device to display the prompt box 1101 in the interface 111. The prompt box 1101 may be used to prompt the user to perform CV analysis. For example, the prompt box 1101 may include a text prompt "To search for materials more accurately, you need to perform smart image recognition. Please tap the button below". The prompt box 1101 may further include a button 1102. The button 1102 may correspond to triggering the CV analysis. For example, the button 1102 may include text information "Start smart image recognition".

Therefore, the interface 111 provides the user with an entry for triggering the CV analysis. The tap operation performed by the user on the button 1102 is used as an example. In this way, the electronic device may start performing CV analysis. A CV analysis process may include image analysis, label configuration, generation of a name of a display column, determining of a display priority, and other processes provided in the foregoing examples. Specific implementations are not described again.

In this embodiment of this application, when performing CV analysis, the electronic device may display corresponding prompt information in the interface.

For example, in some embodiments, during the CV analysis, the gallery application of the electronic device may display the prompt information. For example, during the CV analysis, the electronic device may display a progress prompt 1103 in the interface 112 of the gallery application. The progress prompt 1103 may include a progress bar and text prompt information. The progress bar may be automatically generated based on a proportion of images on which CV processing is completed out of all images. The text prompt information may include "Intelligent clustering in progress...", and is used to prompt the user that CV analysis is in progress.

In some other embodiments, during the CV analysis, a main interface of the electronic device may further display a current CV analysis status in a form of a card. For example, during the CV analysis, the electronic device may display a progress prompt card 1104 in the main interface (for example, an interface 113). In this example, the CV analysis may be performed by the middle platform module. However, because the CV analysis may be performed based on an image stored in the gallery, the progress prompt card 1104 may include a text identifier of the gallery. The progress prompt card 1104 may further include text prompt information and a progress bar. For a display mechanism for the text prompt information and the progress bar, refer to the foregoing examples. Details are not described again.

It may be understood that the interface 113 provides an example of an interface of the CV analysis in a process. After the CV analysis is completed, content of the card in the interface may be further updated correspondingly. For example, after the CV analysis is completed, the interface 114 may display a progress prompt card 1105. The progress prompt card 1105 may include text prompts such as "Smart image recognition completed" indicating that the CV analysis is completed, and the like. In this example, the progress prompt card 1105 may further include a prompt for quickly entering the interface of the smart video function (for example, the interface 81, the interface 82, or the interface 83 shown in FIG. 8A to FIG. 8E). Therefore, when the user taps the progress prompt card 1105, the electronic device may quickly start the smart assistant application, and switch to display the interface 81, the interface 82, or the interface 83. Specifically, the interface 81, the interface 82, or the interface 83 may be switched and displayed based on a pre-configured logic in the smart assistant application.

Therefore, in the foregoing description, through the interaction examples provided in FIG. 8A to FIG. 8E to FIG. 11A to FIG. 11F, this embodiment of this application describes examples of the interaction logics of the smart assistant application in different scenes such as a scene in which the CV analysis is completed and the available display column exists in the scene card indicated by the user, a scene in which the CV analysis is completed but no available display column exists in the scene card indicated by the user, and a scene in which the CV analysis is not completed.

In a specific implementation, the smart assistant application may determine, through an interaction with the gallery application or the middle platform module, to trigger any of the above interaction logics for displaying.

For example, after receiving the operation OP6 of the user, the smart assistant application may request, from the middle platform module, a CV analysis result of the card theme corresponding to the operation OP6.

When the CV analysis is completed and there is an available display column in a scene card indicated by the user, the smart assistant may obtain, from the middle platform module, information about the name of each available display column in the scene card corresponding to the growth theme and the information of the image set, to switch to display the interface 82 shown in FIG. 8A to FIG. 8E.

When the CV analysis is completed and there is no available display column in a scene card indicated by the user, the smart assistant may obtain, from the middle platform module, information that the scene card corresponding to the growth theme does not include the available display column. Therefore, the smart assistant may switch to display the interface 83. Thereafter, after receiving the tap operation performed by the user on the display column 802, the smart assistant may obtain, from the middle platform module, information about an available display column capable of currently generating a video, to switch to display the interface 84 and display the corresponding prompt content 804.

When the CV analysis is not completed, the smart assistant may obtain, from the middle platform module, information that the CV analysis is not completed currently. Therefore, the smart assistant may display based on the interface interaction logic shown in FIG. 11A to FIG. 11F.

In the foregoing example, after the user performs an operation on the button 1102, the electronic device may be triggered to perform CV analysis, and display, to the user, a current CV analysis progress (for example, a smart image recognition progress) in the interface 112, the interface 113, and the like.

In some other embodiments of this application, after the user performs the operation on the button 1102, the smart assistant application may further display, to the user, the current CV analysis progress in the interaction interface of the smart video.

For example, as shown in FIG. 11A to FIG. 11F, after the user taps the button 1102, the smart assistant application may switch to display the interface 115. In the interface 115, the smart assistant application may display, to the user, a response situation in a form of a simulated conversation after operation is performed. For example, the interface 115 may display a dialog bar 1106. The dialog bar 1106 may include simulated conversation information of "Start smart image recognition". The dialog bar 1106 may correspond to the tap operation performed by the user on the button 1102. The interface 115 may further include a progress prompt card 1107. Similar to the foregoing examples of the progress prompt card 1103, the progress prompt card 1104, and the progress prompt card 1105, and the progress prompt card 1107 may further display, to the user, the current CV analysis progress in a form of text information (for example, smart image recognition, intelligent clustering in progress) and a progress bar.

In addition, after the CV analysis is completed, a related prompt similar to "Smart image recognition completed" in the progress prompt card 1105 may be refreshed in the interface 115. Specific implementations are not described again.

It may be understood that in the foregoing example, the smart assistant interacting with the middle platform module to implement interaction between various interfaces is used as an example. When a CV analysis capability is provided by the gallery application, the smart assistant may perform the above interaction with the gallery application, to implement the corresponding triggering of the interaction logic.

In the implementations in the solutions provided in FIG. 7A to FIG. 7F to FIG. 11A to FIG. 11F, the smart assistant displaying each scene card and each display column based on the stored image (for example, the image stored in the gallery) is described in detail as an example. In some other embodiments of this application, the displaying of the scene card and/or the display column may be performed in combination with data from a cloud server.

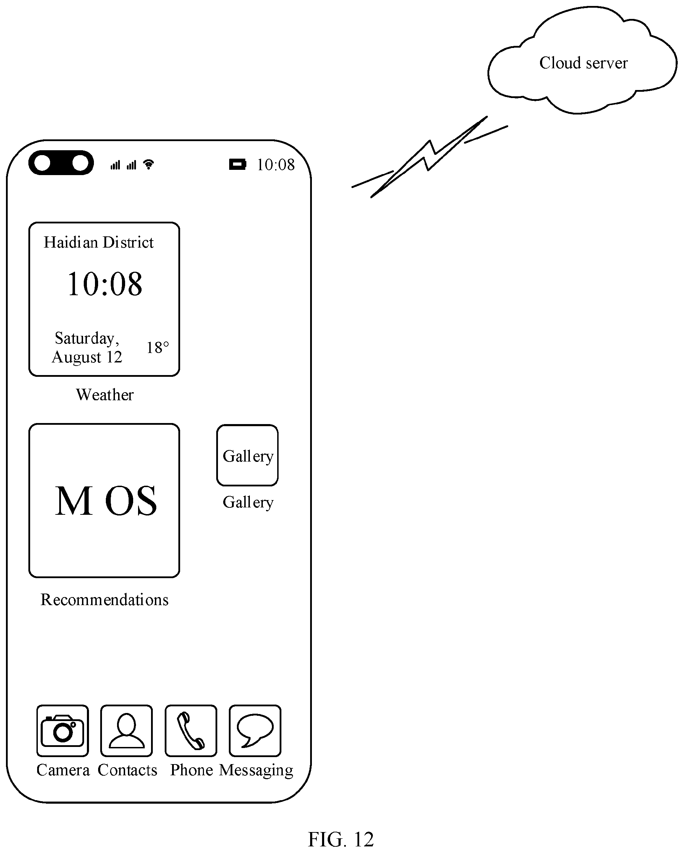

For example, refer to FIG. 12. In some embodiments of this application, the electronic device may be in a communication connection to the cloud server. In this way, in different scenes, one or more of pre-configured parameters (for example, the background image in each scene card, a type of the scene card, display information about a recommended column when there is no available display column, and the like) may be obtained by the electronic device from the cloud server. Therefore, the cloud server may centrally manage the smart video function of the electronic device.

In some other embodiments, the CV analysis capability corresponding to the middle platform module may be further deployed in the cloud server. Therefore, the smart assistant application may control the electronic device to interact with the cloud server, determine whether the CV analysis is currently performed, and determine a related result obtained after the CV analysis is completed, to trigger the interaction logic in the foregoing embodiments.

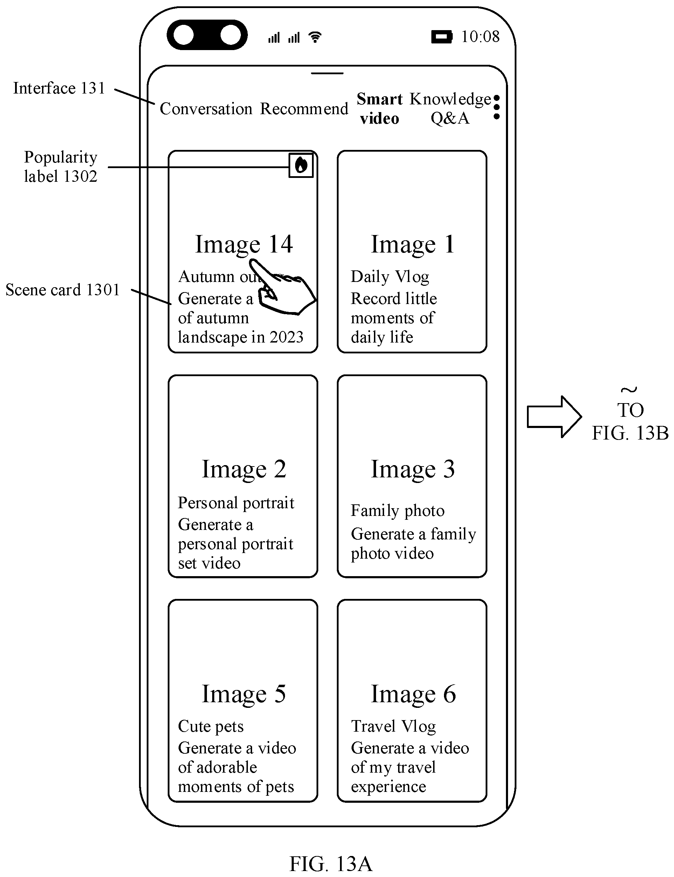

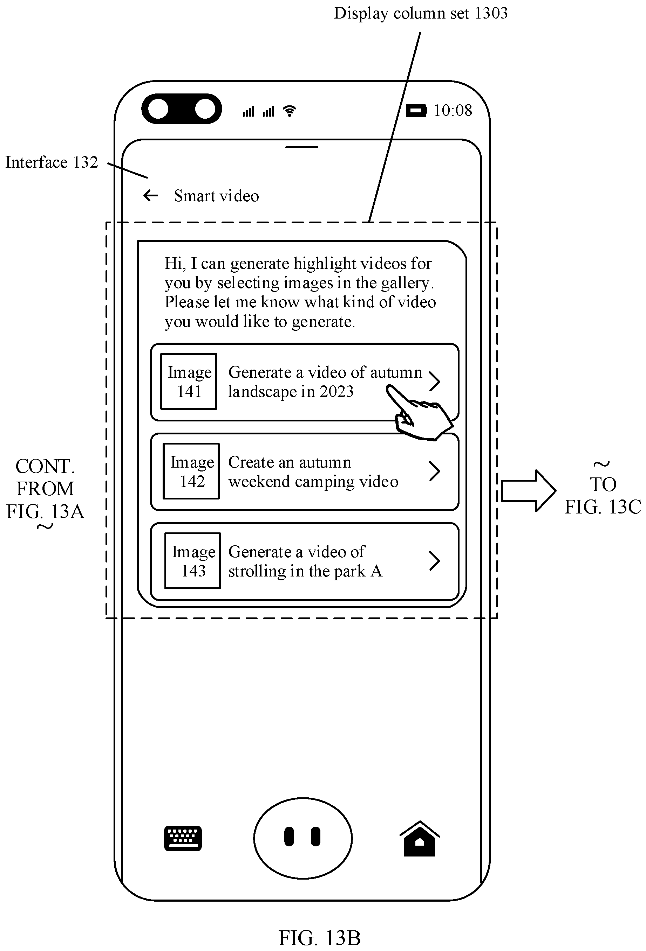

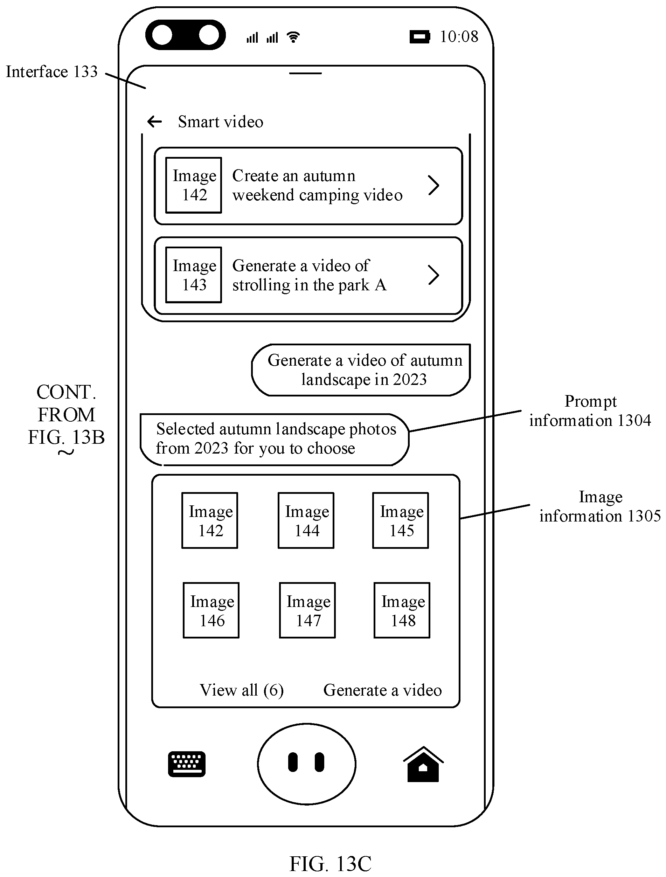

With reference to the example in FIG. 13A to FIG. 13C, the following describes, by using an example in which the cloud server intelligently pushes the scene card to the electronic device, a function of the cloud server to manage the electronic device. In some embodiments, the cloud server may simultaneously push no more than three scene cards to the electronic device.

As shown in FIG. 13A to FIG. 13C, in this example, the cloud server may push a scene card of "Autumn outing" to the electronic device. In some implementations, the scene card of "Autumn outing" may not be included in the plurality of scene cards shown in FIG. 5. The cloud server may push information related to the scene card of "Autumn outing" to the electronic device based on a search volume in a current network, a pre-configured push task, and the like.

For example, the information related to the scene card of "Autumn outing" may include information of the scene card, for example, a background image, a card theme, a prompt statement, and the like.

In this way, when displaying the interface of the smart video, the smart assistant application may display the interface 131 shown in FIG. 13A to FIG. 13C. Refer to the interface 81 in FIG. 8A to FIG. 8E. The interface 131 may include scene images sorted based on the CV analysis. The interface 131 may further include a scene card 1301 of "Autumn outing" displayed on the top. The scene card 1301 may be further referred to as a fifth scene card. The background image in the scene card 1301 may be an image 14 obtained from the cloud server.

That is, when the smart assistant application displays the interface 131, if receiving a scene card pushed by the cloud server, the smart assistant application may adjust a display priority of the scene card pushed by the cloud server to the highest, to display the scene card from the cloud server at the top.

In some embodiments, the scene card (for example, the scene card corresponding to "Autumn outing") that is displayed at the top may correspondingly display a popularity label 1302. Therefore, the user may know, via the popularity label 1302, information that the scene card corresponds to a scene with high popularity in the current network.

The user tapping the scene card 1301 in the interface 131 is used as an example. The smart assistant application may control the electronic device to switch to display the interface 132.

The interface 132 may include a display column set 1303. The display column in the display column set 1303 may be referred to as a seventh display column.

In some embodiments, for the obtaining and displaying manners of the display column set 1303, refer to the display column set 801 shown in FIG. 8A to FIG. 8E. That is, the display column in the display column set 1303 may be obtained by currently performing CV analysis on an image of the electronic device.

In some other embodiments, the display column set 1303 may be further obtained from the cloud server.

In this example, after receiving the tap operation performed by the user on the scene card 1301 that is pushed by the cloud server, the smart assistant may obtain the display column of the scene card 1301 from the cloud server, and display the display column set 1303 in the interface 132 based on the information such as the name and the image of each display column that are obtained from the cloud server.

For example, the smart assistant application may obtain related information of the following three display columns from the cloud:
a display column of which a thumbnail is an image 141, a name is "Generate a video of autumn landscape in 2023", and a display priority is the highest;
a display column of which a thumbnail is an image 142, a name is "Create an autumn weekend camping video", and a display priority is high; and
a display column of which a thumbnail is an image 143, a name is "Generate a video of strolling in the park A", and a display priority is low.

Therefore, the user may obtain, via the display column set 1303, the smart video function based on the image in the network.

The tap operation performed by the user on the display column (for example, the display column of "Generate a video of autumn landscape in 2023") in the display column set 1303 is used as an example.

The smart assistant may refresh a current interface in response to the operation. For example, the interface 133 is displayed. The interface 133 may include operation information about the operation (such as "Generate a video of autumn landscape in 2023") performed by the user. The interface 133 may further include prompt information 1304 and image information 1305. The interface 133 may be referred to as a seventh interface.

In some embodiments, the smart assistant may interact with the cloud server after receiving the tap operation performed by the user on "Generate a video of autumn landscape in 2023", to obtain response information of the display column. For example, the smart assistant may obtain, from the cloud server, prompt information 1304 "Selected autumn landscape photos from 2023 for you to choose". Therefore, the smart assistant may display the prompt information 1304 in a current content column. For another example, the smart assistant may obtain, from the cloud server, an available image corresponding to the current display column. Therefore, the smart assistant may display image information 1305. The image information 1305 displays, to the user, an available image corresponding to the current display column. For example, the image obtained from the cloud and displayed in the image information 1305 may include: an image 142, an image 144, an image 145, an image 146, an image 147, an image 148, and the like.

The image information 1305 may further include an operable control, for example, a control of "generating a video" and the like. Therefore, when needing to obtain a video file based on a network image, the user may perform a tap operation on the control of "generating a video", to trigger the electronic device to generate the video file based on the obtained network image.

Therefore, in the interaction examples in the solutions provided by the foregoing embodiments, the electronic device (for example, the smart assistant application in the electronic device) may better provide the user with interaction experience from the image to the video through an interaction logic that is based on different logics.

It may be understood that, to implement the foregoing functions, the electronic device provided in the embodiments of this application includes a corresponding hardware structure and/or software module for performing the functions. A person skilled in the art should be easily aware that units, algorithms, and steps in examples described with reference to embodiments disclosed in this specification can be implemented in embodiments of this application by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of the embodiments of this application.

In the embodiments of this application, division on functional modules of the electronic device may be performed based on the method examples. For example, the functional modules may be correspondingly divided for each function, or two or more functions may be integrated in one processing module. The integrated module may be implemented in a form of hardware, or may be implemented in a form of a software functional module. It should be noted that the module division in the embodiments of this application is an example and is merely logical function division, and may be other divisions in actual implementation.

The solutions provided in the embodiments of this application are described above mainly from perspectives of the functional modules. A person skilled in the art should be easily aware that, in combination with the units and algorithm steps of the examples described in the embodiments disclosed in this specification, this application can be implemented in a form of hardware or a combination of hardware and computer software. Whether a function is performed by hardware or computer software driving hardware depends on particular applications and design constraints of the technical solutions. A person skilled in the art may use different methods to implement the described functions for each particular application, but this implementation should not be considered as beyond the scope of this application.

The integrated module may be implemented in a form of hardware, or may be implemented in a form of a software functional module. It should be noted that the module division in the embodiments of this application is an example and is merely logical function division, and may be other divisions in actual implementation.

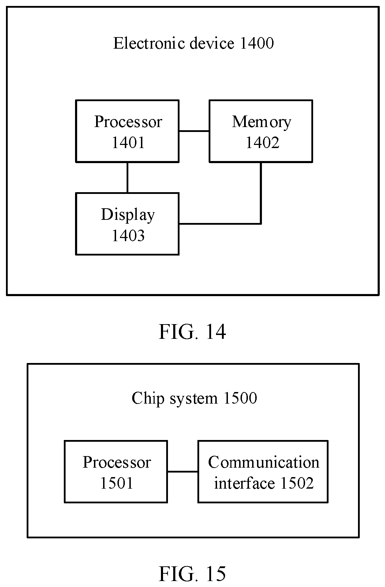

For example, FIG. 14 is a schematic diagram of composition of an electronic device 1400. As shown in FIG. 14, the electronic device 1400 may include a processor 1401 and a memory 1402. The memory 1402 is configured to store computer-executable instructions. For example, in some embodiments, when the processor 1401 executes the instructions stored in the memory 1402, the electronic device 1400 is enabled to perform the method shown in any one of the foregoing embodiments. In this embodiment of this application, the electronic device 1400 may be further configured with a display 1403. This enables the processor 1400 to display different interface images to the user on the display 1403 based on the interaction examples provided in the foregoing embodiments.

It should be noted that all related content of the steps in the foregoing method embodiments may be cited in function descriptions of corresponding functional modules. Details are not described herein again.

FIG. 15 is a schematic diagram of composition of a chip system 1500. The chip system 1500 may include a processor 1501 and a communication interface 1502, configured to support a related device to implement the functions involved in the foregoing embodiments. In a possible design, the chip system further includes a memory, configured to store program instructions and data necessary for an electronic device. The chip system may include chips, or may include a chip and another discrete device. It should be noted that, in some implementations of this application, the communication interface 1502 may also be referred to as an interface circuit.

It should be noted that all related content of the steps in the foregoing method embodiments may be cited in function descriptions of corresponding functional modules. Details are not described herein again.

All or a part of the functions, actions, operations, or steps in the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to specific features and embodiments thereof, it is clear that various modifications and combinations may be made to this application without departing from the spirit and scope of this application. Correspondingly, this specification and the accompanying drawings are merely example descriptions of this application defined by the appended claims, and are considered as having covered any and all modifications, changes, combinations, or equivalents within the scope of this application. It is clear that, a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A display method, applied to an electronic device, wherein the electronic device is configured with a display, and the method comprises:
receiving a first operation, wherein the first operation is used to indicate the electronic device to display an interface of a first function, and the first function corresponds to a video file that is generated based on an image; and
displaying a first interface,
wherein the first interface corresponds to the first function, the first interface comprises at least two scene cards, and each scene card correspondingly displays a background image, a card theme, and a prompt statement;
in the first interface, a first scene card is displayed before a second scene card, and the first scene card and the second scene card are comprised in the at least two scene cards;
a quantity of available display columns of the first scene card is greater than a quantity of available display columns of the second scene card, and each available display column corresponds to one video file capable of being generated; or
a display priority of the first scene card pre-configured by the electronic device is higher than a display priority of the second scene card.

2. The method according to 1, wherein the quantity of available display columns of the first scene card is greater than the quantity of available display columns of the second scene card; and
before the displaying a first interface, the method further comprises:
determining a first quantity of available display columns of the first scene card and a second quantity of available display columns of the second scene card.

3. The method according to 2, wherein the electronic device stores at least one image; and before the determining the first quantity and the second quantity, the method further comprises:
determining attribute information of each image, wherein the attribute information comprises at least one dimension of information: a person attribute, a place attribute, a time attribute, and an event attribute;
annotating the image with at least one label based on the attribute information of the image, wherein the label of the image corresponds to the attribute information of the image; and
determining, for each rule in each scene card, an available image set matching the rule, wherein each scene is configured with at least one rule, and each rule is configured with the at least one label.

4. The method according to 3, wherein
the determining the first quantity comprises:
determining that a quantity of available rules comprised in the first scene card is the first quantity, wherein the available rule comprised in the first scene card is a rule, in all rules correspondingly configured for the first scene card, for which the available image set is non-empty.

5. The method according to claim 3 or 4, wherein
the determining the second quantity comprises:
determining that a quantity of available rules comprised in the second scene card is the second quantity, wherein the available rule comprised in the second scene card is a rule, in all rules correspondingly configured for the second scene card, for which the available image set is non-empty.

6. The method according to 4, wherein the first quantity is not 0;
a prompt statement in the first scene card is the same as a name of a first display column; and
the first display column corresponds to a first rule, and the first rule is a rule, in all available rules in the first scene card, that corresponds to a maximum quantity of available images.

7. The method according to any one of claims 3 to 6, wherein a background image in the first scene card is a preset image.

8. The method according to any one of claims 3 to 7, wherein the first interface further comprises a third scene card; and
the method further comprises:
receiving a second operation, wherein the second operation is an operation performed on the third scene card, and the second operation is used to indicate the electronic device to display details of the third scene card; and
displaying a second interface,
wherein the second interface comprises at least one display column, and each display column corresponds to one rule configured for the third scene card.

9. The method according to 8, wherein
the at least one display column comprised in the second interface comprises a second display column and a third display column;
the second display column is displayed before the third display column; and
a quantity of available images corresponding to a rule for the second display column is larger than a quantity of available images corresponding to a rule for the third display column.

10. The method according to 9, wherein
before the displaying a second interface, the method further comprises:
determining a name of the second display column based on a label of an available image of the second display column.

11. The method according to 8, wherein
the second interface comprises a fourth display column; and
the fourth display column is a pre-configured display column of the third scene card.

12. The method according to 11, wherein
before the displaying a second interface, the method further comprises:
determining that an available set image of each rule in the third scene card is empty.

13. The method according to 11 or 12, wherein an image displayed in the fourth display column is the same as a background image displayed in the third scene card.

14. The method according to any one of claims 11 to 13, wherein the method further comprises:
receiving a third operation, wherein the third operation is an operation performed on the fourth display column; and
displaying a third interface in response to the third operation, wherein
the third interface comprises a fifth display column, and an available image set corresponding to a rule for the fifth prompt column is non-empty.

15. The method according to any one of claims 11 to 13, wherein the method further comprises:
receiving a third operation, wherein the third operation is an operation performed on the fourth display column;
displaying a fourth interface in response to the third operation, wherein
the fourth interface comprises first prompt information, and the first prompt information is used to prompt a user to shoot an image; and before receiving the third operation, determining that an available image set corresponding to a rule for the scene is empty.

16. The method according to 1, wherein the display priority of the first scene card pre-configured by the electronic device is higher than the display priority of the second scene card; and
after the displaying a first interface, the method further comprises:
receiving a fourth operation, wherein the third operation is an operation performed on a fourth scene card, the fourth operation is used to indicate the electronic device to display details of the fourth scene card, and the fourth scene card is displayed in the first interface; and
displaying a fifth interface in response to the fourth operation, wherein the fifth interface comprises a sixth display column, and the sixth display column is a pre-configured display column of the fourth scene card.

17. The method according to 16, wherein the method further comprises:
receiving a fifth operation, wherein the fifth operation is an operation performed on the sixth display column; and
displaying second prompt information in response to the fifth operation, wherein the second prompt information is used to prompt a user to trigger smart image recognition processing; and
the smart image recognition processing comprises:
determining attribute information of each image, wherein the attribute information comprises at least one dimension of information: a person attribute, a place attribute, a time attribute, and an event attribute;
annotating the image with at least one label based on the attribute information of the image, wherein the label of the image corresponds to the attribute information of the image; and
determining, for each rule in each scene card, an available image set matching the rule, wherein each scene is configured with at least one rule, and each rule is configured with the at least one label.

18. The method according to any one of claims 1 to 17, wherein the first interface further comprises a fifth scene card; the fifth display card is displayed before the first scene card; and
before the displaying a first interface, the method further comprises:
receiving first push information, wherein the first push information comprises a background image, a card theme, and a prompt statement in the fifth scene card.

19. The method according to 18, wherein after the displaying a first interface, the method further comprises:
receiving a sixth operation, wherein the sixth operation is used to indicate the electronic device to display details of the fifth scene card;
displaying a sixth interface in response to the sixth operation, wherein the sixth interface comprises a pre-configured seventh display column of the fifth scene card;
receiving a seventh operation, wherein the seventh operation is an operation performed on the seventh display column;
obtaining, in response to the seventh operation, at least one image corresponding to the seventh display column; and
displaying a seventh interface, wherein the seventh interface comprises an image corresponding to the seventh display column.

20. An electronic device, wherein the electronic device comprises a display, a memory, and one or more processors, and the display and the memory are coupled to the processor; and
the memory is configured to store computer program code, and the computer program code comprises computer instructions; and when the processor executes the computer instructions, the electronic device is enabled to perform the method according to any one of claims 1 to 19.
